# EUROPÄISCHE PATENTSCHRIFT

(11) **EP 1 963 162 B1**
(45) Veröffentlichungstag und Bekanntmachung des Hinweises auf die Patenterteilung: **27.05.2009**
(21) Anmeldenummer: 06829742.3
(22) Anmeldetag: 19.12.2006
(51) Int. Cl.: B61L 25/08, G06F 11/16

(54) **VERFAHREN UND ANORDNUNG ZUR SICHEREN ÜBERWACHUNG UND AUSWERTUNG VON BETRIEBSZUSTÄNDEN WENIGSTENS EINES VERKEHRSSTEUERUNGSSYSTEMS SOWIE DEREN VERWENDUNG**
METHOD AND ARRANGEMENT FOR THE RELIABLE MONITORING AND EVALUATION OF OPERATING STATES OF AT LEAST ONE TRAFFIC CONTROL SYSTEM, AND USE OF THE SAME
PROCEDE ET DISPOSITIF DE SURVEILLANCE SURE ET D'EVALUATION D'ETATS DE FONCTIONNEMENT D'AU MOINS UN SYSTEME DE CONTROLE DU TRAFIC ET UTILISATION DE CE PROCEDE ET DE CE DISPOSITIF

(30) Priorität: 20.12.2005 DE 102005060963; 30.01.2006 DE 102006004226
(43) Veröffentlichungstag der Anmeldung: 03.09.2008
(73) Patentinhaber: Funkwerk Information Technologies GmbH, 24145 Kiel (DE)
(72) Erfinder: HUNDT, Reinhold, 24217 Schönberg (DE); OTTO, Ralf, 16547 Birkenwerder (DE); PASTERNOK, Thomas, 38124 Braunschweig (DE); PENSOLD, Rolf, 12459 Berlin (DE); TSCHORN, Stephan, 14552 Langerwisch (DE)
(74) Vertreter: Grape, Knut
(86) Internationale Anmeldenummer: PCT/EP2006/012256
(87) Internationale Veröffentlichungsnummer: WO 2007/071378

(56) Entgegenhaltungen:
- EP-A2- 0 584 895
- EP-A2- 0 856 792
- WO-A-20/04110845
- DE-A1- 10 330 115
- KNAPP R ET AL: "BEDIENUNG UND ANZEIGE IM STELLWERK ZSB 2000 USER INTERFACE FOR ZSB 2000 INTERLOCKING" SIGNAL + DRAHT, TETZLAFF, HAMBURG, DE, Oktober 2005 (2005-10), Seiten 30-34, XP001234513 ISSN: 0037-4997

## Beschreibung

Die Erfindung betrifft ein Verfahren und eine Anordnung zur sicheren Überwachung und Auswertung von Betriebszuständen wenigstens eines Verkehrssteuerungssystems, insbesondere wenigstens einer Steuerungsvorrichtung eines elektronischen Stellwerks für den spurgebundenen Verkehr, sowie deren Verwendung.

Derartige Verfahren und Anordnungen sind allgemein bekannt, wobei zur sicheren Bedienung und Fernsteuerung eines solchen Verkehrssteuerungssystems die Anforderung an einen sicheren Bedienplatz besteht. Gemäß bisherigem Stand der Technik wird im Wesentlichen zwischen sogenanntem Umschaltverfahren, Rückleseverfahren und einkanaligem Rückleseverfahren unterschieden. Das Umschaltverfahren basiert auf einer Umschaltung zwischen zwei Graphiksystemen mittels eines Schalters und einem anschließenden Vergleich von zwei Meldebildern. Die Umschaltung und der Vergleich erfolgen zyklisch in einem bestimmten Takt. Die Sicherheit des Umschaltverfahrens hängt nahezu ausschließlich vom Betriebspersonal ab. Das Rückleseverfahren basiert auf einem Vergleich von zwei Meldebildern durch ein Graphiksystem, wobei die zwei Meldebilder nach deren Anzeige auf einem Bildschirm oder dergleichen zur Datenverarbeitungsvorrichtung zu deren Vergleich miteinander zurückverbracht bzw. sogenannt zurückgelesen werden. Eine solche Rücklesung führt insoweit zu einem gewissen Zeitverzug. Ausgesprochen nachteilig aber ist bei einer solchen Rücklesung die damit zusammenhängende Gefahr von Verlusten von Daten- und/oder Informationen auf dem Weg von dem Bildschirm oder dergleichen zurück zu der Datenverarbeitungsvorrichtung, wodurch wiederum die Sicherheitsanforderungen beinflusst sind. Das einkanalige Rückleseverfahren baut schließlich auf der reaktiven Sicherung über eine einkanalige elektronische Struktur auf. Im Übrigen sind bei dem einkanaligen Rückleseverfahren die gleichen Nachteile wie beim Rückleseverfahren zu beobachten. Das Rückleseverfahren bzw. das einkanalige Rückleseverfahren erfordern nicht zuletzt aufgrund des Vergleichs von den Speichern der zwei Meldebilder in deren Gesamtheit äußerst hochleistungsfähige Hard- und Software sowie ausgesprochen große Speicherkapazitäten. Dennoch sind die Verarbeitungszeiten oftmals in unzufriedenstellender Weise zu lang. Letztere Verfahren besitzen zudem den Nachteil, aufgrund der benötigten ausgesprochen großen Speicherkapazitäten im Allgemeinen die miteinander zu vergleichenden Meldebilder nicht vollständig, sondern lediglich segmentweise zu untersuchen, wodurch wiederum die Sicherheit beeinträchtigt werden kann. Schließlich erfordern letztere Verfahren zudem einen sogenannten "Sicheren Rechner", welcher den Bau- und Kostenaufwand von Anordnungen zur Durchführung dieser Verfahren zusätzlich in ausgesprochen nachteiliger Weise- erhöht.

Die WO 2004/110845 A1 beschreibt ein Verfahren zur sicheren Überwachung und- Auswertung von Betriebszuständen wenigstens eines Verkehrssteuerungssystems, insbesondere wenigstens einer Steuerungsvorrichtung eines elektronischen Stellwerks für den spurgebundenen Verkehr, das auf dem sogenannten Rückleseverfahren basiert. Dabei werden Daten und/oder Informationen eines Betriebszustandes durch die wenigstens eine Steuerungsvorrichtung erfasst. Dieses Verfahren basiert auf dem Prinzip eines sogenannten "Sicheren Rechners". Daten und/oder Informationen betreffend verschiedene Betriebszustände eines Stellwerks werden von verschiedenen. Sensoren erfasst und einem an sich bekannten "Sicheren Rechner" zugeführt. Der "Sichere Rechner" umfasst vorzugsweise drei Computer, welche die von den Sensoren gelieferten Daten und/oder Informationen unabhängig voneinander verarbeiten und unter Zwischenschaltung einer Schnittstelle in Form von zwei Ausgaben an eine Bedienungsschnittstelle weiterleiten. Die zwei Ausgaben werden allerdings nur an die. Bedienungsschnittstelle weitergeleitet, wenn zwei der drei computer einen übereinstimmenden Ausgabewert aufweisen. Die zwei Ausgaben werden sodann einem zusätzlichen Überwachung- und Auswertungsverfahren durch die bzw. in der Bedienungsschnittstelle unterzogen.

Aus der EP 0 856 792 A2 ist ein Verfahren zur sicheren Darstellung auf einem Monitor bekannt, das auf dem sogenannten Rückleseverfahren basiert. Zwei Meldebilder werden durch ein Graphiksystem verglichen. Nach deren Anzeige werden die zwei Meldebilder auf dem Monitor zur Datenverarbeitungsvorrichtung zum Vergleich miteinander zurückverbracht bzw. zurückgelesen. Entsprechend dem Ergebnis dieses Vergleiches kann ein als ein "Sicherer Rechner" ausgebildeter Vergleichsrechner eine Fehlermeldung veranlassen oder weitere Benutzereingaben unterbinden.

Den Erfindung liegt daher die Aufgabe zugrunde, ein Verfahren und eine Anordnung zur sicheren. Überwachung und Auswertung von Betriebszuständen wenigstens eines Verkehrssteuerungssystems zur Verfügung zu stellen, mit welcher sich die obigen Nachteile verhindern lassen, welche mithin konstruktiv besonders einfach, schnell arbeitend, zugleich zuverlässig, mithin ausgesprochen störungs- sowie ausfallsicher, sowie darüber hinaus sehr kostengünstig sind, sowie deren Verwendung bereitzustellen.

Diese Aufgabe wird in verfahrenstechnischer Hinsicht auf überraschend einfache Weise durch die Merkmale des Anspruchs 1 gelöst.

Demnach ist durch die Ausgestaltung des erfindungsgemäßen Verfahrens zur sicheren Überwachung und Auswertung von Betriebszuständen wenigstens eines Verkehrssteuerungssystems, insbesondere wenigstens einer Steuerungsvorrichtung eines elektronischen Stellwerks für den spurgebundenen Verkehr, um-fassend folgende Schritte:
a) Erfassen von Daten (nachfolgend ist der Begriff "Daten" für jede beliebige Art von Daten, Datenprotokollen, Datenframes, Datenpaketen und Datenzellen sowie Kombinationen davon verwendet) und/oder Informationen eines Betriebszustandes durch die wenigstens eine Steuerungsvorrichtung,
b) zeitgleiches Übersenden der erfassten Daten und/oder Informationen des Betriebszustandes von der wenigstens einen Steuerungsvorrichtung über zwei unabhängige Kanäle an zwei gesonderte, miteinander kommunizierende Datenverarbeitungsvorrichtungen,
c) Empfangen und Aufbereiten der erfassten Daten und/oder Informationen des Betriebszustandes der wenigstens einen Steuerungsvorrichtung durch die zwei Datenverarbeitungsvorrichtungen,
d) Visualisieren der empfangenen und aufbereiteten Daten und/oder Informationen des Betriebszustandes auf einem Bildschirm oder dergleichen durch wenigstens eine de zwei Datenverarbeitungsvorrichtungen,
e) pixelgenaues Erzeugen eines Bildsignales nach DVI (Digital Visual Interface)-Standard (nachfolgend mit "DVI-Bildsignal" bezeichnet) aus den empfangenen und aufbereiteten Daten und/oder Informationen des Betriebszustandes jeweils durch die zwei Datenverarbeitungsvorrichtungen und Übergeben der zwei DVI-Bildsignale von den zwei Datenverarbeitungsvorrichtungen an eine Bildsignalvergleichsvorrichtung,
f) Vergleichen und Auswerten der zwei DVI-Bildsignale miteinander durch die Bildsignalvergleichsvorrichtung, und
g) Erzeugen oder Unterdrücken eines Impulses oder Signales in Antwort auf die Auswertung des Vergleichs zwischen den zwei DVI-Bildsignalen sowie Weiterleiten dessen von der Bildsignalvergleichsvorrichtung an die zwei Datenverarbeitungsvorrichtungen zur weitergehenden Bedienung und/oder Steuerung der wenigstens einen Steuerungsvorrichtung oder zur Sperrung des weitergehenden Bedienung und/oder Steuerung der wenigstens einen Steuerungsvorrichtung,
ein konstruktiv besonders einfaches, zudem unmittelbar ansprechendes und damit schnell arbeitendes Verfahren zur sicheren Überwachung und Auswertung von Betriebszuständen wenigstens eines. Verkehrssteuerungssystems insgesamt erreicht. In diesem Zusammenhang ist neben dem wesentlichen Aspekt einer hohen Betriebssicherheit und -zuverlässigkeit von ganz besonderem Vorteil, dass bei dem Verfahren nach der erfindung stets ausschließlich der Bitstrom von zwei Bildsignalen nach DVI (Digital Visual Interface)-Standard miteinander verglichen und ausgewertet wird. Der Vergleich von Daten und/oder Informationen gemäß Schritt e) und f) erfolgt anhand des Bitstroms der zwei. Bildsignale nach DVI (Digital Visual Interface)-Standard, und zwar Online und parallel zum Visualisieren der empfangenen und aufbereiteten Daten und/oder Informationen des Betriebszustandes auf dem Bildschirm oder dergleichen gemäß Schritt d). Der DVI-Standard, der weitgehend auf der Video Electronics Standards Association basiert und von der DDWG (Digital Display Working Group) in die Praxis umgesetzt wurde, wird dabei nicht zum Visualisieren der empfangenen und aufbereiteten Daten und/oder Informationen des Betriebszustandes auf dem Bildschirm oder dergleichen, sondern zum eigentlichen Vergleichen und Auswerten der zwei DVI-Bildsignale miteinander verwendet. Mit dem erfindungsgemäßen Verfahren lässt sich eine Gleichzeitigkeit von der Freigabe von Bilddaten zum Online-Datenvergleich erreichen.

Damit einhergehend lassen sich die Anforderungen an äußerst hochleistungsfähige Hard- und Software - wie im bisherigen Stand der Technik - erheblich absenken, ohne die Betriebssicherheit und. -zuverlässigkeit nachteilig zu beeinflussen. Mithin ist bei dem Verfahren nach der Erfindung eine sogenannter "Sicherer Rechner", wie bei bisher bekannten Verfahren, nicht erforderlich. Das erfindungsgemäße Verfahrens lässt sich vielmehr bereits mit drei herkömmlich auf dem Markt erwerbbaren Datenverarbeitungsvorrichtungen bzw. Rechnern, zum Beispiel mit standardisierten Personal Computern, verwirklichen, wovon zwei möglichst von gleichem Hersteller und gleicher Ausführung sowie Ausstattung (Hard- und Softwareversion) sein sollten. Bei diesen zwei Datenverarbeitungsvorrichtungen bzw. Rechnern kann es sich aufgrund dessen um zwei sogenannte "Nicht-sichere Rechner" handeln. Der Bildsignalvergleich kann mittels einer Datenverarbeitungsvorrichtung bzw. einen Rechner realisiert werden, die bzw. der zwischen den beiden etwa baugleichen Datenverarbeitungsvorrichtungen bzw. Rechnern angeordnet ist und sich von den beiden etwa baugleichen Datenverarbeitungsvorrichtungen bzw. Rechnern nach Hersteller, Ausführung und Ausstattung unterscheidet.

Umgekehrt lassen sich die Betriebssicherheit und -zuverlässigkeit des erfindungsgemäßen Verfahrens noch wesentlich erhöhen, wenn unverändert bisherige hochleistungsfähige Hard- und Software sowie ausgesprochen große Speicherkapazitäten zum Einsatz kommen.

Das erfindungsgemäße Verfahren zeichnet sich gegenuber im Stand der Technik bekannten. Verfahren zusatlich noch durch, das ein Vergleich der zwei DVI-Bildsignale auf einfache und schnelle Weise in deren Gesamtheit möglich ist. Mit dem erfindungsgemäßen Verfahren lassen sich mithin die Betriebssicherheit und -zuverlässigkeit- gegenüber herkömmlichen Verfahren, die lediglich auf einem Vergleich von reduzierten Daten- und/oder Informationsmengen basieren, noch weiter verbessern.

Nicht zuletzt hieraus resultierend lässt sich zugleich ein ausgesprochen kostengünstiges Verfahren zur sicheren Überwachung und Auswertung von Betriebszuständen wenigstens eines Verkehrssteuerungssystems erhalten, da dessen Störungs- sowie Ausfallsicherheit selbst bei einer etwaig vorzunehmenden Anpassung der Hard- und Software sowie möglichem Reduzierung der Speicherkapazitäten uneingeschränkt hoch ist.

Weitere ganz besonders vorteilhafte Einzelheiten des erfindungsgemäßen Verfahrens zur sicheren Überwachung und Auswertung von Betriebszuständen wenigstens eines Verkehrssteuerungssystems sind in den Ansprüchen 2 bis 22, beschrieben.

Demnach werden die erfassten Daten und/oder Informationen des Betriebszustandes zeitgleich von der wenigstens einen Steuerungsvorrichtung an die zwei Datenverarbeitungsvorrichtungen jeweils über ein Ethernet übersendet.

Die erfassten Daten und/oder Informationen des Betriebszustandes werden zeitgleich von der wenigstens einen Steuerungsvorrichtung an die zwei Datenverarbeitungsvorrichtungen zur Vermeidung einer Kollision mit von wenigstens einer weiteren Steuerungsvorrichtung zeitgleich übersandten Daten und/oder Informationen unter Zwischenschaltung einer Ethernet-Schalteinrichtung übersendet.

Die erfassten Daten und/oder Informationen des Betriebszustandes werden zeitgleich von der wenigstens einen Steuerungsvorrichtung an die zwei Datenverarbeitungsvorrichtungen unter Zwischenschaltung mindestens einer Wiederholungseinrichtung zur Wiedergabe und Weiterleitung der erfassten Daten und/oder Informationen des Betriebszustandes und/oder einer Aufbereitungseinrichtung zur Demodulation mit anschließender Modulation übersendet.

Die erfassten Daten und/oder Informationen des Betriebszustandes werden zeitgleich von der wenigstens einen Steuerungsvorrichtung an die zwei Datenverarbeitungsvorrichtungen mittels. Lichtwellenleitern übersendet.

Zum Aufbereiten der empfangenen Daten und/oder Informationen des Betriebszustandes der wenigstens einen Steuerungsvorrichtung wird durch die zwei Datenverarbeitungsvorrichtungen eine Verifikation einer Sequenznummer der Protokolle der Daten und/oder Informationen vorgenommen.

Die Daten und/oder Informationen des Betriebszustandes der wenigstens einen Steuerungsvorrichtung werden zur Verifikation der Sequenznummer der Protokolle der Daten und/oder Informationen in einem Eingangspuffer der jeweiligen Datenverarbeitungsvorrichtung abgelegt.

Bei der Verifikation der Sequenznummer der Protokolle der Daten und/oder Informationen wird deren logischer Fortlauf geprüft.

Bei der Verifikation der Sequenznummer der Protokolle der Daten und/oder Informationen wird die Sequenznummer zwischen den zwei Datenverarbeitungsvorrichtungen verglichen.

Die. Daten und/oder Informationen des Betriebszustandes der wenigstens einen Steuerungsvorrichtung werden bei Feststellung des logischen Fortlaufs der Sequenznummer und bei Über einstimmung der Sequenznummer zwischen den zwei Datenverarbeitungsvorrichtungen in eine Prozessdatenbank oder dergleichen der jeweiligen Datenverarbeitungsvorrichtung, in welcher zugleich Daten und/oder Informationen einer Topologie des Verkehrssteuerungssystems oder eines Teiles davon hinterlegt sind, verschoben.

Das jeweilige DVI-Bildsignal aus den aufbereiteten, insbesondere in die Prozessdatenbank oder dergleichen verschobenen, Daten und/oder Informationen des Betriebszustandes der wenigstens einen Steuerungsvorrichtung und den in der Prozessdatenbank oder dergleichen hinterlegten Daten und/oder Informationen der Topologie des Verkehrssteuerungssystems oder eines Teiles davon wird durch die zwei Datenverarbeitungsvorrichtungen, vorzugsweise durch eine entsprechende DVI-Graphikkarte, generiert.

Die Daten und/oder Informationen des Betriebszustandes der wenigstens einen Steuerungsvorrichtung werden bei fehlender Feststellung des logischen Fortlaufs der Sequenznummer und/oder bei fehlender Übereinstimmung der Sequenznummer zwischen den zwei Datenverarbeitungsvorrichtungen blockiert.

Die Daten und/oder Informationen des Betriebszustandes der wenigstens einen Steuerungsvorrichtung werden vor einer Blokkierung wenigstens ein weiteres Mal von der wenigstens einen Steuerungsvorrichtung übersendet und erneut einer Verifikation unterzogen.

Eine Blockierung der Daten und/oder Informationen des Betriebszustandes der wenigstens einen Steuerungsvorrichtung wird über eine Aktualisierungsmeldeeinrichtung bekanntemacht.

Die Verifikation der Sequenznummer der Protokolle der Daten und/oder Informationen wird in festgelegtem und, insbesondere durch eine Überwachungseinrichtung, überwachtem Zyklus durchgeführt.

Zum- Vergleichen der zwei von den zwei Datenverarbeitungsvorrichtungen übergebenden DVI-Bildsignale durch die Bildsignalvergleichsvorrichtung wird eine Synchronisierung der zwei Datenverarbeitungsvorrichtungen untereinander vorgenommen, wobei durch die Bildsignalvergleichsvorrichtung der Takt der Bildschirmwiederholfrequenz vorgegeben wird und die zwei Datenverarbeitungsvorrichtungen zyklisch zur Visualisierung der aktuellen Daten und/oder Informationen aufgefordert werden.

Zum Vergleichen der zwei von den zwei Datenverarbeitungsvorrichtungen übergebenen DVI-Bildsignale durch die Bildsignalvergleichsvorrichtung wird eine Synchronisierung der zwei DVI-Bildsignale vorgenommen.

Die zwei von den zwei Datenverarbeitungsvorrichtungen übergebenen DVI-Bildsignale werden zur Synchronisierung in einen Zwischenspeicher, insbesondere einen Ringspeicher, der Bildsignalvergleichsvorrichtung eingelesen und mit einer Kennzeichnung an einander korrespondierender Stelle innerhalb des jeweiligen DVI-Bildsignales versehen.

Zur Kennzeichnung der zwei DVI-Bildsignale werden an einander korrespondierender Stelle zwei Trigger auf die zwei DVI-Bildsignale gelegt, wobei insbesondere die zwei Trigger auf die Clock-Signale der beiden Steuercodes der zwei DVI-Bildsignale zur Kennzeichnung des Anfangs oder des Endes eines Bildes gelegt werden.

Die zwei DVI-Bildsignale werden in einer ersten Richtung zu- bzw. gegeneinander verschoben, bis die Kennzeichnung der zwei DVI-Bildsignale an einander korrespondierender Stelle zur Deckung gelangen.

Bei festgestellter Übereinstimmung der zwei miteinander verglichenen DVI-Bildsignale von der Bildsignalvergleichsvorrichtung wird ein Impuls oder ein Signal generiert und an die zwei Datenverarbeitungsvorrichtungen zur weitergehenden B:e-dienung und/oder Steuerung der wenigstens einen Steuerungsvorrichtung gesendet.

Bei festgestellter Abweichung zwischen den zwei miteinander verglichenen DVI-Bildsignalen werden die zwei DVI-Bildsignale in einer zweiten, zu der ersten entgegengesetzten Richtung zu- bzw. gegeneinander verschoben, bis die Kennzeichnung der zwei DVI-Bildsignale an einander korrespondierender Stelle zur Deckung gelangen.

Bei erneut festgestellter Abweichung zwischen den zwei miteinander.. verglichenen. DVI-Bildsignalen von der Bildsignalvergleichsvorrichtung wird ein Impuls oder ein Signal zur Sperrung der weitergehenden Bedienung und/oder Steuerung der wenigstens einen Steuerungsvorrichtung gesetzt.

Eine Sperrung der weitergehenden Bedienung und/oder Steuerung der wenigstens einen Steuerungsvorrichtung wird über eine Aktualisierungsmeldeeinrichtung bekanntgemacht.

Per Maus und Tastatur getätigte Befehle des Betriebspersonals werden zur Aufbereitung für das zweikanalige System durch einen Maus-/Tastatur-Umsetzer rückwirkungsfrei gedoppelt.

Des Weiteren wird diese Aufgabe in vorrichtungstechnischer Hinsicht auf überraschend einfache Weise durch die Merkmale des Anspruchs 23 gelöst.

Durch die erfindungsgemäße. Ausgestaltung der erfindungsgemäßen Anordnung zur sicheren Überwachung und. Auswertung von Betriebszuständen wenigstens eines Verkehrssteuerungssystems, insbesondere wenigstens einer Steuerungsvorrichtung eines elektronischen Stellwerks für den spurgebundenen Verkehr, umfassend zwei gesonderte, miteinander kommunizierende Datenverarbeitungsvorrichtungen, die jeweils eine Einrichtung zum Empfangen und Aufbereiten von erhaltenen Daten und/oder Informationen eines Beteribszustandes der wenigstens einen Steuerungsvorrichtung, eine Einrichtung zum Visualisieren der empfangenen und aufbereiteten Daten und/oder Informationen des Betriebszustandes auf einem Bildschirm oder dergleichen und eine Einrichtung zum pixelgenauen Erzeugen eines Bildsgnales nach DVI (Digital Visual Interface)-Standard aus den empfangenen und aufbereiteten Daten und/oder Informationen des Betriebszustandes aufweisen, und eine Bildsignalvergleichsvorrichtung zum Vergleichen und Auswerten der zwei DVI-Bildsignale miteinander sowie zum Erzeugen oder Unterdrücken eines Impulses oder Signales in Antwort auf die Auswertung des Vergleichs zwischen den zwei DVI-Bildsignalen sowie Weiterleiten dessen von der Bildsignalvergleichsvorrichtung an die zwei Datenverarbeitungsvorrichtungen zur weitergehenden Bedienung und/oder Steuerung der wenigstens einen Steuerungsvorrichtung oder zur Sperrung der weitergehenden Bedienung und/oder Steuerung der wenigstens einen Steuerungsvorrichtung, ist eine konstruktiv besonders einfache, zudem unmittelbar ansprechende und damit schnell arbeitende Anordnung insgesamt erreicht. Zugleich ist mit der erfindungsgemäßen Anordnung eine hohe Betriebszuverlässigkeit gewährleistet, da nur mehr der Bitstrom von zwei DVI-Bildsignalen miteinander verglichen und ausgewertet wird. Von ganz besonderer Bedeutung ist bei alledem, dass der Vergleich der zwei DVI-Bildsignale auf deren digitalem Protokoll, das sich bei identischer Bildbearbeitung der zwei parallel arbeitenden Datenverarbeitungsvorrichtungen nicht unterscheidet, basiert. Damit einhergehend lassen sich die Anforderungen an äußerst hochleistungsfähige Hard- und Software - wie im bisherigen Stand der Technik - erheblich vermindern, wenngleich dadurch die Betriebssicherheit und -zuverlässigkeit nicht beeinflusst wird. Umgekehrt lassen sich die Betriebssicherheit und -zuverlässigkeit der erfindungsgemäßen Anordnung noch wesentlich erhöhen, wenn unverändert bisherige hochleistungsfähige H-ard- und Software sowie ausgesprochen große Speicherkapazitäten Verwendung finden. Nicht zuletzt hieraus resultierend lässt sich zugleich eine sehr kostengünstige Anordnung zur sicheren Überwachung und Auswertung von Betriebszuständen wenigstens eines Verkehrssteuerungssystems erhalten, da deren Störungs- sowie Ausfallsicherheit selbst bei einer etwaig vorzunehmenden Anpassung der Hard- und Software sowie möglichen Reduzierung der Speicherkapazitäten uneingeschränkt hoch ist. Im Übrigen lassen sich die zuvor aufgezeigten Vorteile des erfindungsgemäßen Verfahrens in gleicher Weise durch die Anordnung der Erfindung erhalten.

Ganz besonders vorteilhafte konstruktive Einzelheiten der erfindungsgemäßen Anordnung zur sicheren. Überwachung und Auswertung von Betriebszuständen wenigstens eines Verkehrssteuerungssystems sind in den Ansprüchen 24 bis 42 beschrieben.

Demnach sind zwei Datenverarbeitungsvorrichtungen zueinander im Wesentlichen identisch, insbesondere identisch, ausgebildet.

Die zwei Datenverarbeitungsvorrichtungen weisen jeweils wenigstens einen gemeinsamen Bildschirm auf, der mit einer Einrichtung zur Redundanzumschaltung verbunden ist und über die Einrichtung zum Visualisieren der empfangenen und aufbereiteten Daten und/oder Informationen des Betriebszustandes, insbesondere einen Speicher, vorzugsweise einen Bildspeicher einer Graphikkarte, der zwei Datenverarbeitungsvorrichtungen ansteuerbar ist.

Die zwei Datenverarbeitungsvorrichtungen kommunizieren miteinander und/oder mit der Bildsignalvergleichsvorrichtung über ein Ethernet, insbesondere eine Ethernet/LAN (Local Area Network)-Verbindung,

Die Einrichtung zum Empfangen und Aufbereiten der erhaltenen Daten und/oder Informationen des Betriebszustandes ist als Eingangspuffer ausgebildet.

Die Einrichtung zum Empfangen und Aufbereiten der erhaltenen Daten und/oderr Informationen des Betriebszustandes umfasst eine Einrichtung zum Überprüfen des logischen Fortlaufs- der Sequenznummer.

Die Einrichtung zum Empfangen und Aufbereiten der erhaltenen Daten und/oder Informationen des Betriebszustandes umfasst eine Einrichtung zum Vergleichen der Sequenznummer zwischen den zwei Datenverarbeitungsvorrichtungen.

Der Einrichtung zum Empfangen und Aufbereiten der erhaltenen Daten und/oder Informationen des Betriebszustandes ist eine-Einrichtung zu deren Überwachung in festgelegtem Zyklus zugeordnet.

Die zwei Datenverarbeitungsvorrichtungen umfassen jeweils eine Prozessdatenbank oder dergleichen zur Aufnahme und Speicherung von aufbereiteten Daten und/oder Informationen des Betriebszustandes der wenigstens einen Steuerungsvorrichtung und Daten und/oder Informationen einer Topologie des Verkehrssteuerungssystems oder eines Teiles davon.

Die Einrichtung zum Visualisieren der Daten und/oder Informationen ist als analoge Graphikkarte, insbesondere als VGA (Video Graphics Array)-Graphikkarte, oder als digitale Graphikkarte, insbesondere als DVI-Graphikkarte oder HDTV (High Definition TeleVision)-Graphikkarte, ausgebildet.

Die Einrichtung zum pixelgenauen Erzeugen des DVI-Bildsignales ist als DVI-Graphikkarte ausgebildet.

Die zwei Datenverarbeitungsvorrichtungen said mit der Bildsignalvergleichsvorrichtung jeweils unmittelbar über die Einrichtung zum pixelgenauen Erzeugen eines DVI-Bildsignales, insbesondere die DVI-Graphikkarte, verbunden.

Die Bildsignalvergleichsvorrichtung ist mit einer Einrichtung zur Synchronisierung der zwei Datenverarbeitungsvorrichtungen untereinander versehen, die ein Element zur Vorgabe des Taktes der Bildschirmwiederholfrequenz und ein Element zur zyklischen Aufforderung der zwei Datenverarbeitungsvörrichtungen zur Visualisierung der aktuellen Daten und/oder Informationen umfasst.

Die Bildsignalvergleichsvorrichtung umfasst eine Einrichtung zur Synchronisierung der zwei DVI-Bildsignale.

Die Einrichtung zur Synchronisierung der zwei DVI-Bildsignale umfasst einen Zwischenspeicher, insbesondere einen Ringspeicher, und eine Einrichtung zur Kennzeichnung der zwei DVI-Bildsignale an einander korrespondierender Stelle innerhalb des jeweiligen DVI-Bildsignales.

Der Zwischenspeicher, insbesondere der Ringspeicher, weist eine Speicherkapazität für wenigstens ein DVI-Bildsignal, insbesondere drei DVI-Bildsignale, auf.

Die Einrichtung zur Kennzeichnung der zwei DVI-Bildsignale an einander korrespondierender Stelle umfasst ein Element zum Generieren von zwei auf die zwei DVI-Bildsignale zu legenden Triggern.

Die Einrichtung zur Synchronisierung der zwei DVI-Bildsignale weist ein Element zur Verschiebung der zwei DVI-Bildsignale zu- bzw. gegeneinander und ein Element zur gegenseitigen Indeckungbringung der Kennzeichnung der zwei DVI-Bildsignale an einander korrespondierender Stelle auf.

Die Bildsignalvergleichsvorrichtung umfasst eine Einrichtung zum Vergleichen und Auswerten der zwei DVI-Bildsignale miteinander.

Die Bildsignalvergleichsvorrichtung umfasst eine Einrichtung zum Erzeugen oder Unterdrücken eines Impulses oder Signales in Antwort auf die Auswertung des Vergleichs zwischen den zwei DVI-Bildsignalenn.

Den zwei Datenverarbeitungsvorrichtungen ist eine Aktualisierungsmeldeeinrichtung zur Bekanntmachung einer Blockierung der Daten und/oder Informationen des Betriebszustandes der wenigstens einen Steuerungsvorrichtung und/oder einer Sperrung der weitergehenden Bedienung und/oder Steuerung der wenigstens einen Steuerungsvorrichtung zugeordnet.

Den Datenverarbeitungsvorrichtungen ist ein mit den Datenverarbeitungsvorrichtungen kommunizierender Maus-/Tastatur-Umsetzer zur rückwirkungsfreien Dopplung von per Maus und Tastatur getätigten Befehlen des Betriebspersonals zugeordnet.

Schließlich liegt es noch im Rahmen der Erfindung entsprechend Anspruch 43, ein Verfahren bzw. eine Anordnung gemäß der Erfindung zur Fernbedienung und/oder Fernsteuerung wenigstens eines elektronischen Stellwerks für den spurgebundenen Verkehr, insbesondere für den Schienen- und Bahnverkehr, vorzugsweise für Eisenbahnen, gummibereifte Metrobahnen, Einschienenbahnen oder Hänge-/Schwebebahnen, ganz bevorzugt zum Beispiel auf Regionalstrecken, mittels eines sicheren Bedienplatzes an zentraler Stelle zu benutzen.

Weitere Vorteile, Merkmale und Einzelheiten der Erfindung ergeben sich aus der nachfolgenden Beschreibung bevorzugter Ausführungsformen und Beispiele der Erfindung sowie anhand der Zeichnungen. Hierbei zeigen:
- Fig. 1: eine schematische Darstellung einer Ausführungsform einer erfindungsgemäß ausgebildeten Anordnung zur sicheren Überwachung und Auswertung von Betriebszu ständen eines Verkehrssteuerungssystems,
- Fig. 2: eine schematische Darstellung einer Ausführungsform einer erfindungsgemäß ausgebildeten Anordnung zur sicheren Uberwachung und Auswertung von Betriebszustanden von vier Verkehrssteuerungssystemen,
- Fig. 3: eine schematische Darstellung der Ausführungsform der erfindungsgemäß ausgebildeten Anordnung zur sicheren Überwachung und Auswertung von Betriebszuständen weinigstens eines Verkehrssteuerungssystems (nicht dargestellt) entsprechend den Fig. 1 und 2, in vergrößerter Darstellung,
- Fig. 4: eine schematische Darstellung einer erfindungsgemäßen Einrichtung zur Synchronisierung von zwei DVI-Bildsignalen als Bestandteil der Ausführungsform der erfindungsgemäß ausgebildeten Anordnung der Fig. 3,
- Fig. 5: eine schematische Darstellung einer erfindungsgemäßen Einrichtung zur Redundanzumschaltung zwischen wenigstens einem, mit jeder der zwei Datenverarbeitungsvorrichtungen verbundenen Bildschirm als Bestandteil der Ausführungsform der erfindungsgemäß ausgebildeten Anordnung der Fig. 3,
- Fig. 6: eine schematische Darstellung einer Kommunikation zwischen einem sicheren Bedienplatz an zentraler Stelle und vier elektronischen Stellwerken, und
- Fig. 7: eine schematische Darstellung einer Kommunikation zwischen einem sicheren Bedienplatz an zentraler Stelle und mehreren elektronischen Stellwerken über Ausdehnungen größerer Entfernung.

Bei der nachfolgenden Beschreibung von verschiedenen Ausführungsbeispielen der erfindungsgemäßen Anordnung 10 sind einander entsprechende, gleiche Bauteile jeweils mit identischen Bezugsziffern versehen.

Das erfindungsgemäße Verfahren und/oder die Anordnung 10 nach der Erfindung ist/sind sicheren Überwachung und Auswertung von Betriebszuständen wenigstens eines. Verkehrssteuerungssystems 12, 12', 12'', 12''', insbesondere wenigstens einer Steuerungsvorrichtung 14, 14', 14'', 14''', beispielsweise in Form eines Stellwerksrechners, eines elektronischen Stellwerks 16, 16', 16'', 16''' für den spurgebundenen Verkehr, insbesondere für den Schienen- und Bahnverkehr, vorzugsweise für Eisenbahnen, gummibereifte Metrobahnen, Einschienenbahnen oder Hänge-/Schwebebahnen, vorgesehen.

In ausgesprochen vorteilhafter Weise dient/dienen das: erfindungsgemäße Verfahren und die Anordnung 10 nach der Erfindung dabei der Fernbedienung und/oder Fernsteuerung_wenigstens eines elektronischen Stellwerks 16, 16', 16'', 16''' für den spurgebundenen Verkehr, ganz bevorzugt insbesondere auf Regionalstrecken, mittels eines sicheren Bedienplatzes 18 für das Betriebs- bzw. Bedienpersonal, zum Beispiel einen Fahrdienstleiter, an zentraler Stelle bzw. in der sogenannten Leitzentrale. Dabei wird unter dem Begriff "Fernbedienung" eine Steuerung über eine geringere Reichweite und/oder vor Ort verstanden. Der der Begriff "Fernsteuerung" wir hingegen für eine Steuerung über eine größere Reichweite und/oder an anderem Ort verwendet.

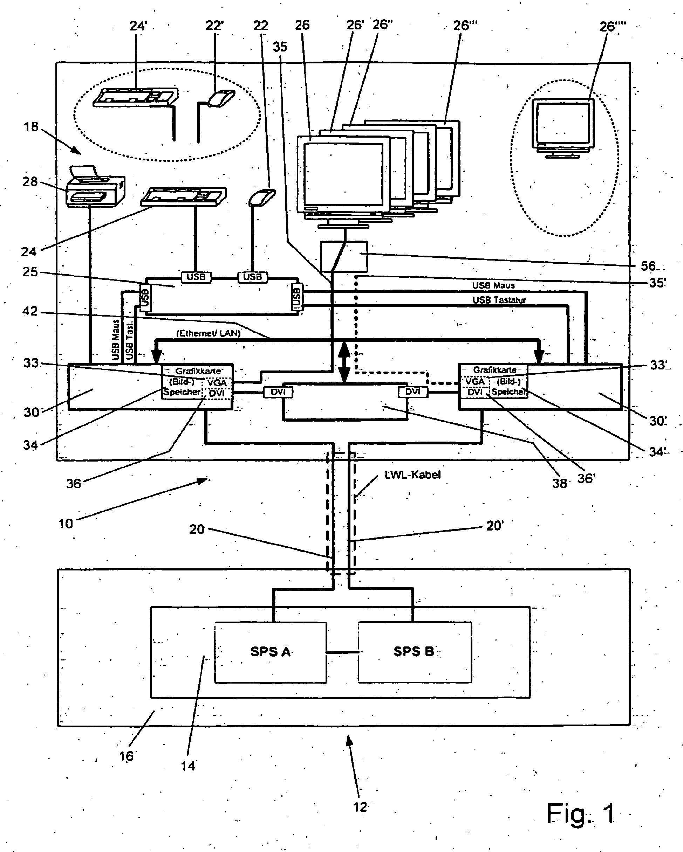

Die in der Fig. 1 dargestellte Ausführungsform der erfindungsgemäßen Anordnung 10 ist zur sicheren Überwachung und Auswertung von Betriebszuständen des Verkehrssteuerungssystems 12 bzw. der Steuerungsvorrichtung 14 des elektronischen Stellwerks 16 vorgesehen. Die Anordnung 10 und das Verkehrssteuerungssystem 12 bzw. die Steuerungsvorrichtung 14 des elektronischen Stellwerks 16 kommunizieren, wie nachfolgend noch näher ausgeführt wird, miteinander über zwei unabhängige Kanäle 20, 20'. Die Kommunikation wird für jeden unabhängigen Kanal jeweils über ein Ethernet geführt. Dabei werden bevorzugt geschlossene Netzwerke entsprechend EN50159-1 verwendet. Da solche Netzwerk die Einbindung mehrerer Kommunikationspartner zulassen, ist es ohne weiteres möglich, die Anordnung 10 nach der Erfindung zur- sicheren Überwachung- und- Auswertungvon. Betriebszuständen von lediglich einem Verkehrssteuerungssystem 12, wie in der Fig. 1 dargestellt ist, auf eine Vielzahl davon zu erweitern.

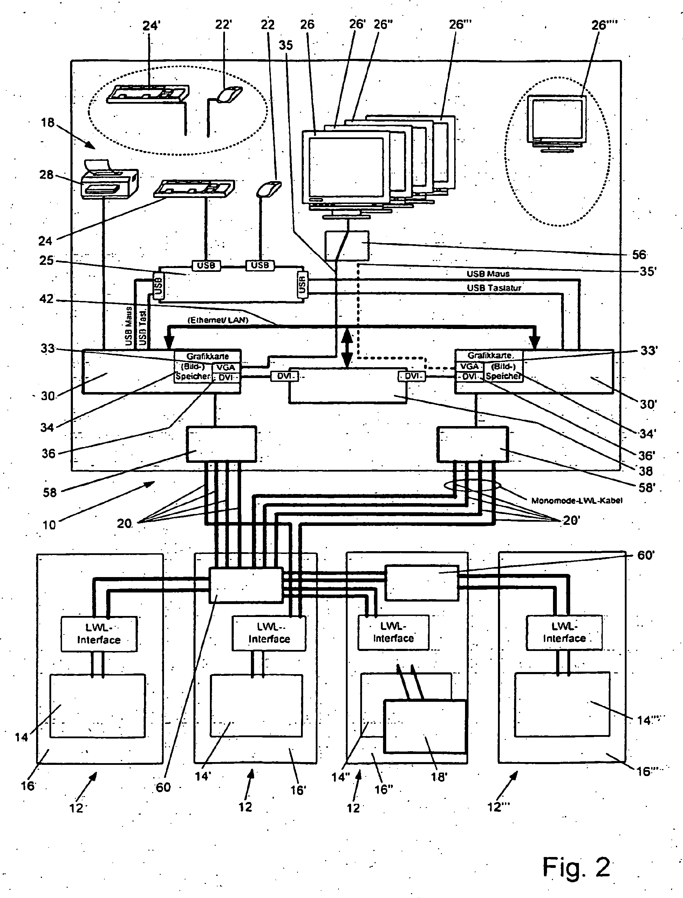

In der Fig. 2 ist nur beispielhaft eine Ausführungsform der erfindungsgemäßen Anordnung 10 geneigt, welche der sicheren Überwachung und Auswertung von Betriebszuständen von insgesamt vier Verkehrssteuerungssystemen 12, 12', 12'', 12''', d.h. demnach von vier Steuerungsvorrichtungen 14, 14', 14'', 14''' der elektronischen Stellwerke 16, 16', 16'', 16''', dient.

Entsprechend den Fig. 1 und 2 besteht der Bedienplatz 18 zum Beispiel aus einer Maus 22, einer Tastatur 24, einem Maus-/ Tastatur-Umsetzer 25, wenigstens einem bis vorzugsweise vier. Bildschirmen 26, 26', 26'', 26''', Monitoren oder dergleichen Datensichtgeräten, wie beispielsweise CRT (Cathode Ray Tube)-, TFT (Thin Film Transistor)-Bildschirmen oder auch einem Beamer etc., zur Prozessvisualisierung und einem Drucker 28.

Auf den Bildschirmen 26, 26', 26'', 26''' werden Daten und/oder Informationen unterschiedlicher Sicherheitsrelevanz zu deren Überwachung und Auswertung dargestellt. Zur Darstellung sicherheitsrelevanter Inhalte ist der Bildschirm 26 als CRT (Cathode Ray Tube)-Bildschirm ausgestaltet. So ist der Bildschirm 26 in die Lage versetzt, signaltechnische Anforderungen zu erfüllen. Demgegenüber können die Bildschirme 26', 26'', 26''' zur Anzeige nicht oder weniger sicherheitsrelevanter Inhalte als TFT (Thin Film Transistor)-Bildschirme ausgebildet sein. Auf diese Weise sind etwaige nachteilige Auswirkungen spezifischer Speicherdefekte, die bei TFT-Bildschirmen auftreten können, bei dem Bildschirm 26 zur Darstellung sicherheitsrelevanter Inhalte ausgeschlossen.

Beispielsweise lassen sich im Falle einer Fernbedienung und/oder Fernsteuerung des wenigstens einen elektronischen Stellwerks 16, 16', 16'', 16''' für den spurgebundenen Verkehr auf dem Bildschirm 26, auch Lupe genannt, ein Gleisbild, auf den Bildschirmen 26', 26", auch Bereichsübersichten genannt, ebenfalls Gleisbilder und auf dem Bildschirm 26''', auch Kommunikationsanzeige genannt, Bedienungshandlungen, Störmeldungen etc. schematisch darstellen.

Ohne im Einzelnen näher zu erläutern, können darüber hinaus als Rückfallebene eine weitere Maus 22', eine weitere Tastatur 24' und ein oder mehrere weitere Bildschirm/e 26'''' vorgesehen sein.

Wie der Fig. 2 darüber hinaus entnehmbar ist, ist zusätzlich auch die Einbindung eines optional örtlichen Bedienplatzes 18', zum Beispiel in Form eines Personal Computers oder Notebooks, denkbar. Der Bedienplatz 18' ist als Beispiel in der Fig. 2 der Steuerungsvorrichtung 14'' des Stellwerks 16'' zugeordnet. Den Bedienplatz 18' wird nur im Bedarfsfall, d.h. zum Beispiel bei Ausfall der Kommunikationsverbindung mit der Steuerungsvorrichtung 14, 14', 14'', 14''' oder einem gravierennen Fehler am zentralen Bedienplatz 18, anstelle des zentralen Bedienplatzes 18 aktiviert. Eine Kollision wischen den beiden Bedienplätzen 18, 18' ist dadurch sicher vermieden, als grundsätzlich ausschließlich einer der beiden Bedienplätze 18, 18' angeschloss sein kann.

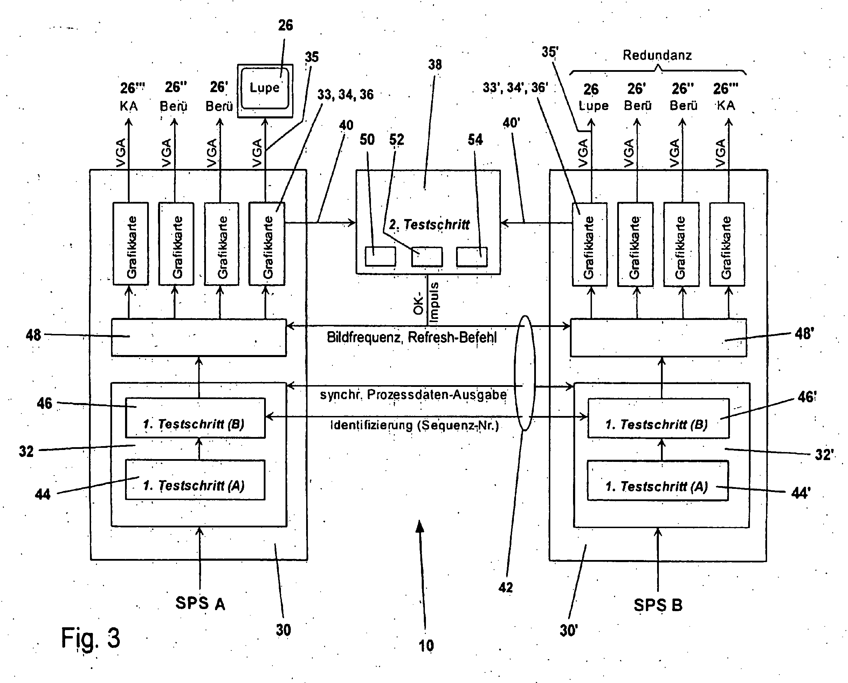

In der Fig. 3 ist nun eine Ausführungsform einer solchen Anordnung 10 nach der Erfindung zur sicheren Überwachung und Auswertung von Betriebszuständen wenigstens eines Verkehrssteuerungssystems 12, 12', 12'', 12''' im Einzelnen dargestellt.

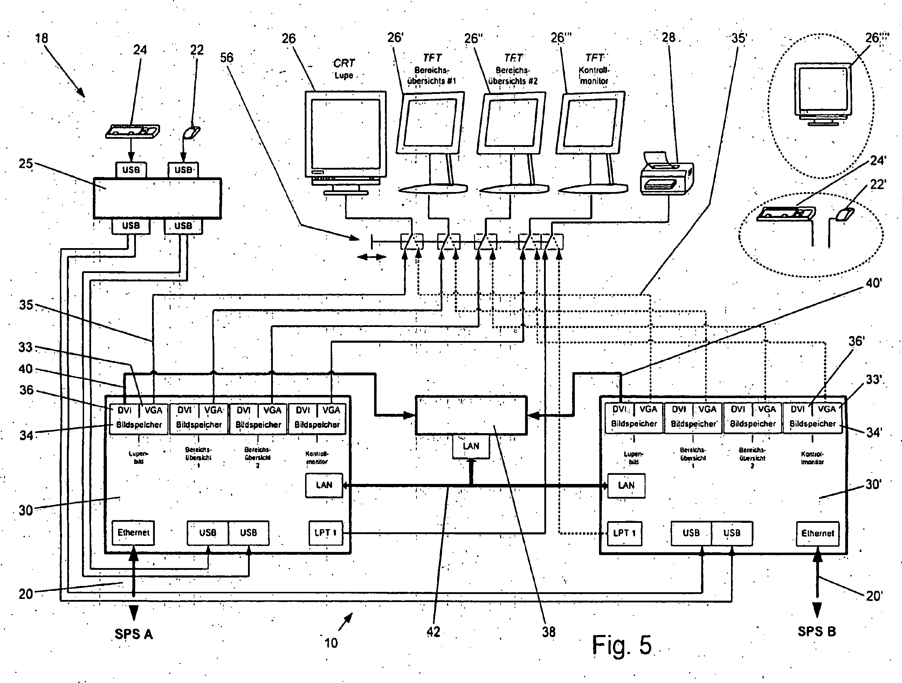

Die Anordnung 10 nach der Erfindung umfasst zwei gesonderte, d.h. von einander getrennte, unabhängig und parallel zueinander arbeitende Datenverarbeitungsvorrichtungen 30, 30'. Die zwei Datenverarbeitungsvorrichtungen 30, 30' sind zueinander (im Wesentlichen) identisch ausgebildet. Mithin weisen die zwei Datenverarbeitungsvorrichtungen 30, 30' zueinander gleiche Systemkomponenten, die weitgehend von übereinstimmender Konfiguration sind. Gewisse Unterschiede in der Konfiguration der Systemkomponenten sind jedoch - falls gewünscht oder vorteilhaft - durchaus möglich und zulässig. Die zwei Datenverarbeitungsvorrichtungen 30, 30' arbeiten dabei zwar weitgehend asynchron, werden aber quasi synchron bedient, indem die per Maus 22 und Tastatur 24 betätigten Befehle des Betriebspersonals zuvor rückwirkungsfrei gedoppelt werden. Eine der wesentlichen Aufgaben der zwei Datenverarbeitungsvorrichtungen- 30, 30' besteht darin, (Melde-)Bilder auf den Bildschirmen 26, 26', 26'', 26''' zu generieren und, wie aus der Fig. 5 hervorgeht, in Umkehrrichtung die per Maus 22 und Tastatur 24 betätigten Befehle des Betriebspersonals für die Steuerungsvorrichtungen 14, 14', 14'', 14''' aufzubereiten.

Entsprechend der Fig. 3 sind den zwei Datenverarbeitungsvorrichtungen 30, 30' mithin gleichermaßen jeweils vier Bildschirme 26, 26.', 26'', 26''' zugeordnet. Die Bildschirme 26, 26', 26'', 26''' der Datenverarbeitungsvorrichtung 30 befinden sich dabei in Betrieb. Die Ansteuerung der Bildschirme 26, 26', 26'', 26''' der Datenverarbeitungsvorrichtung 30' ist demgegenüber als Rückfallebene vorgesehen und wird erst in Betrieb genommen, wenn eine Störung oder ein Ausfall einer oder mehrerer Ansteuerung/en der Bildschirme 26, 26', 26'', 26''' der Datenverarbeitungsvorrichtung 30 auftritt.

Die Datenverarbeitungsvorrichtungen 30, 30' weisen jeweils eine Einrichtung 32, 32' zum Empfangen und Aufbereiten von erhaltenen Daten und/öder Informationen eines Betriebszustandes der wenigstens einen Steuerungsvorrichtung 14, 14', 14'', 14''' auf. Die Daten und/oder Informationen sollen von der Datenverarbeitungseinrichtung 30 oder 30', d.h. bei der in der Fig. 3 dargestellten Ausführungsform von der Datenverarbeitungsvorrichtung 30, auf den jeweils verbundenen, zugeordneten Bildschirmen 26, 26', 26'', 26''', 26'''', insbesondere auf dem Bildschirm 26, visualisiert werden.

Weiterhin umfassen die Datenverarbeitungsvorrichtungen 30, 30' jeweils eine Einrichtung 33, 33' zum Visualisieren bzw. Anzeigen von Daten und/oder Informationen des Betriebszustandes der wenigstens einen Steuerungsvorrichtung 14, 14', 14'', 14''', welche zuvor von der Einrichtung 32, 32' empfangen und aufbereitet wurden, auf dem Bildschirm. 26, 26', 26'', 26''', 26'''' oder dergleichen. Die Einrichtungen 33, 33' sind bei der in den Fig. 1 bis 3 und 5 beispielhaft dargestellten Ausführungsform der Anordnung 10 nach der Erfindung jeweils als VGA (Video Graphics Array)-Graphikkarte ausgebildet. Die Einrichtungen 33, 33' stehen jeweils mit einem Speicher 39, 34', in welchem die zu visualisierenden, zuvor empfangenen und aufbereiteten Daten und/oder Informationen abgelegt sind, und über entsprechende Schnittstellen und Leitungen 35, 35' mit dem/den Bildschirm/en 26, 26', 26'', 26''', 26'''' in Verbindung.

Des Weiteren sind die Datenverarbeitungsvrrichtungen 30, 30' jeweils mit einer Einrichtung 36, 36' zum pixelgenauen Erzeugen eines DVI-Bildsignales versehen. Die Einrichtungen 36, 36' zum pixelgenauen Erzeugen des DVI-Bildsignales sind dabei jeweils als DV-I-Graphikkarte ausgebildet, die ebenfalls mit dem Speicher 34, 34' in Verbindung steht.

Bei dem Speicher 34, 34' kann es sich zum Beispiel um einen Bildspeicher einer (analogen oder digitalen) Graphikkarte oder um einen externen Bildspeicher (nicht gezeigt) handeln. Ohne im Einzelnen dargestellt zu sein, kann der Speicher 34, 34' demnach auch durchaus Bestandteil der Einrichtung 33, 33' zum Visualisieren bzw. Anzeigen von Daten und/oder Informationen und/oder der Einrichtung 36, 36' zum pixelgenauen Erzeugen eines DVI-Bildsignales selbst sein.

Darüber hinaus umfasst die Anordnung 10 nach der Erfindung eine Bildsignalvergleichsvorrichtung 38 zum Vergleichen und Auswerten der zwei DVI-Bildsignale miteinander. Die Bildsignalvergleichsvorrichtung 38 ist als separate Personal Computer ausgebildet.

Die Bildvergleichsvorrichtung 38 ist mit den zwei Datenverarbeitungsvorrichtungen 30, 30' verbunden. Vorzugsweise stehen dabei die Bildvergleichsvorrichtung 38 und die Einrichtung 36, 36' zum pixelgenauen Erzeugen des DVI-Bildsignales bzw. die DVI-Graphikkarte über entsprechende Schnittstellen und Leitungen 40, 40' jeweils unmittelbar in Verbindung.

Die Bildsignalvergleichsvorrichtung 38 ist zusätzlich zum Erzeugen oder Unterdrücken eines Impulses oder Signales in Antwort auf die Auswertung des Vergleichs zwischen den zwei DVI-Bildsignalen vorgesehen. Schließlich leistet die Bildsignalvergleichsvorrichtung 38 einen solchen Impuls bzw. ein solches Signal, falls nicht ohnehin unterdrückt, an die zwei. Datenverarbeitungsvorrichtungen 30, 30' weiter, um die wenigstens eine Steuerungsvorrichtung 14, 14', 14'', 14''' weitergehend zu bedienen und/oder zu steuern oder um die weitergehende Bedienung und/oder Steuerung der wenigstens einen Steuerungsvorrichtung. 14, 14', 14'', 14''' zu sperren. Kumulativ oder alternativ kann das positive Vergleichsergebnis eines übereinstimmenden DVI-Bildsignales zugleich auf dem Bildschirm 26 und/oder einem der weiteren Bildschirme 26', 26'', 26''', 26'''' angezeigt werden.

Wie der Fig. 3 dabei zu entnehmen ist, kommunizieren die zwei Datenverarbeitungsvorrichtungen 30, 30' miteinander und/oder darüber hinaus noch zusätzlich mit der. Bildvergleichsvorrichtung 38 über ein Ethernet 42, insbesondere eine Ethernet/LAN (Local Area Network)-Verbindung.

Die Einrichtung 32, 32' zum Empfangen und Aufbereiten der haltenen Daten und/oder Informationen des Betriebszustandes der wenigstens einen Steuerungsvorrichtung 14, 14', 14'', 14''' umfasst vorzugsweise einen Eingangspuffer (nicht im Einzelnen dargestellt). Die Aktualität der Sequenznummer wird durch einen jeweils angehängten Zeitstempel verifiziert.

Die Einrichtung 32, 32', die unter anderem zur Verifikation der Sequenznummer der Protokolle der Daten und/oder Informationen vorgesehen ist, umfasst einerseits eine Einrichtung 44, 44' zum Überprüfen des logischen Fortlaufs der Sequenznummer in einem ersten Testschritt (A).

Andererseits umfasst die Einrichtung 32, 32' eine Einrichtung 46, 46' zum Vergleichen der Sequenznummer und damit der Übereinstimmung der Daten und/oder Informationen zwischen den zwei Datenverarbeitungsvorrichtungen 30, 30' in einem ersten Testschritt (B).

Ohne im Einzelnen dargestellt zu sein, ist der Einrichtung 32, 32' zum Empfangen und Aufbereiten der erhaltenen Daten und/oder Informationen des Betriebszustandes der wenigstens einen Steuerungsvorrichtung 14, 14', 14'', 14''' des Weiteren eine Einrichtung zu deren Überwachung in festgelegtem Zyklus zugeordnet.

Um einen Parallelbetrieb der zwei Datenverarbeitungsvorrichtungen 30, 30' zu ermöglichen, werden die zwei Datenverarbeitungsvorrichtungen 30, 30' somit zyklisch über das Ethernet 42 funktional/logisch synchronisiert. Durch die Synchronisierung wird erreicht, dass Befehle synchron zweikanalig von und zu den Steuerungsvorrichtungen 14, 14', 14'', 14''' gesendet werden und in Gegenrichtung die zwei DVI-Bildsignale synchron generiert werden. Ein Vergleich der Protokolle mit minimalen Laufzeitunterschieden ist damit sichergestellt.

Der eingangs erwähnte Maus-/Tastatur-Umsetzer 25 ist vorgesehen, um Befehle des Betriebspersonals, die per Maus 22, 22' und Tastatur 24, 24' getätigt werden, zur Aufbereitung für das zweikanalige System rückwirkungsfrei zu doppeln. Bei der Signaldopplung ist zu beachten, dass zwei asynchron laufende Datenverarbeitungsvorrichtungen 30, 30' bzw. Rechnersysteme über eine Bedienschnittstelle quasi synchron bedient werden.

(USB (Universal Serial Bus)-)Signale von Maus 22, 22' und Tastatur 24, 24' werden auf den Maus-/Tastatur-Umsetzer 25 geleitet. Der Maus-/Tastatur-Umsetzer 25 stellt die (USB-) Signale an zwei (USB-) Schnittstellen für die Datenverarbeitungsvorrichtungen 30, 30' zur Verfügung. Durch die Verdopplung der Bedieneingaben wird zugleich eine Entkopplung der unterschiedlichen Rechnerktakte erreicht: Das heißt aber auch, dass der Maus-/Tastatur-Umsetzer 25 über einen eigenen Prozessor verfügt, der die (USB-) Signale erfasst und verarbeitet.

Eine weitere Aufgabe des Maus-/Tastatur-Umsetzers 25 besteht darin, die relativen. Eingaben der (USB-)Mäus 22', 22' in Absolutwerte für die Mausposition zu konvertieren. Dadurch werden die Datenverarbeitungsvorrichtungen 30, 30' mit identischen Absolutwerte für die jeweilige Mausposition versorgt, so dass die Bildsignalvergleichsvorrichtung 38 nicht wegen unterschiedlicher Positionen der Maus 22, 22' ansprechen kann.

Um bei einem Start der Anordnung 10 bzw. einem Hochlaufen des Datenverarbeitungsvorrichtungen 30, 30' nicht an der Betriebssystemabfrage einer nicht angeschlossenen Maus 22, 22' und/oder Tastatur 24, 24' stehenzubleiben, werden die Ausgänge des Maus-/Tastatur-Umsetzers 25 so beschaltet, dass sie bei nicht aktivem Maus-/Tastatur-Umsetzer 25 die galvanischen Werte einer Maus 22, 22' und Tastatur 24, 24' widerspiegeln. Ist der Maus-/Tastatur-Umsetzer 25 aktiv, werden die Ersatzwerte durch die wahren Werte automatisch ersetzt.

Bei der in der Fig. 3 gezeigten Ausführungsform der Anordnung 10 nach der Erfindung sind die zwei Datenverarbeitungsvorrichtungen 30, 30' darüber hinaus jeweils mit einer Prozessdatenbank 48, 48' oder dergleichen ausgestattet. Die Prozessdatenbank 48, 48' dient der Aufnahme und Speicherung einerseits von aufbereiteten Daten und/oder informationen des Betriebszustandes der wenigstens einen Steuerungsvorrichtung 14, 14', 14'', 14''' und andererseits von Daten und/oder Informationen einer Topologie des Verkehrssteuerungssystems 12, 12', 12'', 12''' oder eines Teiles davon. Zum Beispiel kann die Topologie von Bahnhöfen entlang einer spurgebundenen Verkehrsstrecke, wie insbesondere einer Schienen- oder Bahnstrecke, beispielsweise einer Regionalstrecke, mit Gleisbildern durch Symbole für Weichen, Signale und alle sonstigen Fahrwegelemente hinterlegt sein. Die Prozessdatenbank 48, 48' steht mit dem Speicher 34, 34' in Verbindung steht, um einen ständigen Abgleich zwischen den Daten und/oder Informationen in der Prozessdatenbank 48, 48' und in dem Speicher 34, 34' zu ermöglichen. Die Daten und/oder Informationen der Prozessdatenbank 48, 48' sind in Bildsignalformaten gehalten und können so direkt zur Generierung des Bildsignales genutzt werden. Damit einhergehend ist ein schnelles, zeitunverzögertes Umschalten zwischen den Bildschirmen 26, 26', 26'', 26''' und damit zwischen den Betriebszuständen verschiedener Steuerungsvorrichtungen 14, 14', 14'', 14''' ermöglicht.

Die Bildsignalvergleichsvorrichtung 38, die entsprechend der Fig. 3 zur Durchführung eines zweiten Testschrittes dient, ist bei der vorliegenden Ausführungsform der erfindungsgemäßen Anordnung 10 ihrerseits mit einer Einrichtung 50 zur Synchronisierung der zwei Datenverarbeitungsvorrichtungen 30, 30' untereinander versehen. Dabei besitzt die Einrichtung 50 ein Element zur Vorgabe des Taktes der Bildschirmwiederholfrequenz (nicht gezeigt) und ein Element zur zyklischen Aufforderung der zwei Datenverarbeitungsvorrichtungen 30, 30' zur Visualisierung der aktuellen Daten und/oder Informationen (ebenfalls nicht dargestellt).

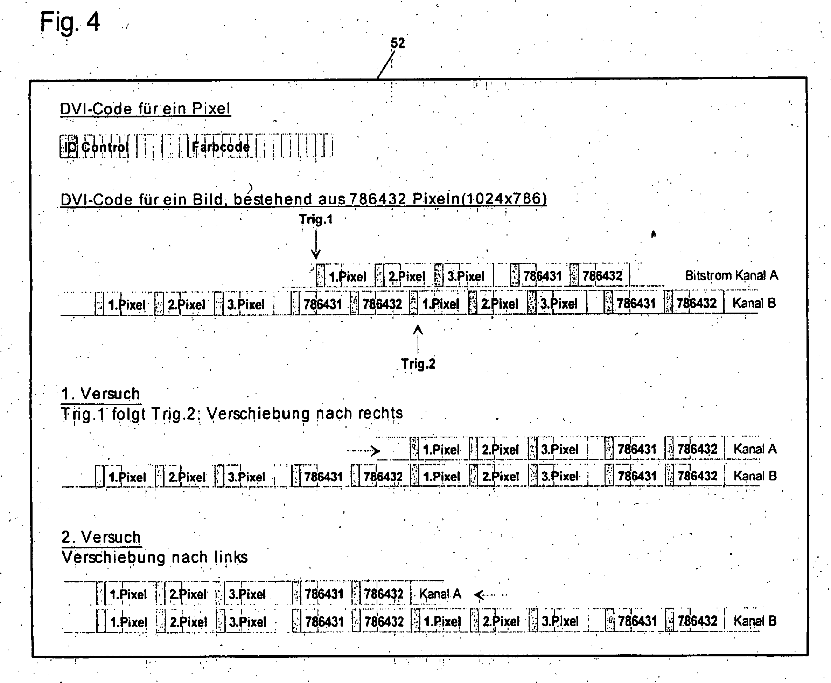

Trotz der vorhergegangenen Synchronisierung der zwei Datenverarbeitungsvorrichtungen 30, 30' untereinander, ist nach wie vor von einer Asynchronität der zwei DVI-Bildsignale auszugehen. Zusatzlich umfasst die Bildsignalvergleichsvorrichtung 38 daher eine Einrichtung 52 zur Synchronisierung der zwei DVI-Bildsignale selbst, deren Funktion und Wirkungsweise anhand der Fig. 4 schematisch erläutert wird.

Die Einrichtung 52 zur Synchronisierung der zwei DVI-Bildsignale umfasst einen Zwischenspeicher (nicht im.Einzelnen gezeigt), insbesondere einen Ringspeicher. Der Zwischenspeicher bzw. der Ringspeicher besitzt in diesem Zusammenhang eine Speicherkapazität für wenigstens ein DVI-Buldsignal und vorzugsweise für drei DVI-Bildsignale.

Weiterhin ist die Einrichtung 52 zur Synchronisierung der zwei DVI-Bildsignale mit einer Einrichtung zur Kennzeichnung der zwei DVI-Bildsignale an einander korrespondierender Stelle innerhalb des jeweiligen DVI-Bildsignales ausgerüstet (ebenfalls nicht dargestellt). Diese Einrichtung umfasst ein. Element zum Generieren von zwei auf die zwei DVI-Bildsignale zu legenden Triggern.

Wie im Zusammenhang mit der Beschreibung des erfindungsgemäßen Verfahrens anhand der Fig. 4 im Einzelnen noch näher erläutert wird, weist die Einrichtung 52 zur Synchronisierung der zwei DVI-Bildsignale darüber hinaus ein Element zur Verschiebung der zwei DVI-Bildsignale zu- bzw. gegeneinander und ein Element zur gegenseitigen Indeckungbringung der Kennzeichnung der zwei DVI-Bildsignale an einander korrespondierender Stelle auf (nicht im Einzelnen gezeigt).

Neben einer Einrichtung zum Vergleichen und Auswerten der zwei DVI-Bildsignale miteinander (auch nicht im Einzelnen gezeigt) umfasst die Bildsignalvergleichsvorrichtung 38 weiterhin eine Einrichtung 54 zum Erzeugern oder Unterdrücken eines Impulses oder Signales in Antwort auf die Auswertung des Vergleichs zwischen den zwei DVI-Bildsignalen.

Den zwei Datenverarbeitungsvorrichtungen 30, 30' is.t eine Aktualisierungsmeldeeinrichtung (nicht gezeigt) zugeordnet, um dem Betriebspersonal eine Blockierung der Daten und/oder Informationen des Betriebszustandes der wenigstens einen Steuerungsvorrichtung 14, 14' 14'', 14''' und/oder eine Sperrungder weitergehenden Bedienung und/oder Steuerung der wenigstens einen Steuerungsvorrichtung 14, 14' 14'', 14''' bekanntzumachen. Die Blockierung oder Sperrung kann dem Betriebspersonal dabei zum Beispiel mittels Bildern oder entsprechenden (akustischen und/oder optischen) Warnhinweisen auf einem der weiteren zwei Bildschirme 26', 26'' angezeigt werden.

Entsprechend der Fig. 5 ist den zwei Datenverarbeitungsvorrichtungen 30, 30' eine Einrichtung 56 zur Redundanzumschaltung zugeordnet, die mit den zwei Datenverarbeitungsvorrichtungen 30, 30' verbunden ist und mittels der jeweils wenigstens ein Bildschirm 26, 26', 26'', 26''' ansteuerbar ist. Obgleich die zwei Datenverarbeitungsvorrichtungen 30, 30' parallel entsprechende Bilder, die auf den Bildschirmen 26, 26', 26'', 26''' visualisiert werden können, generieren, wirddie Anzeige auf den Bildschirmen. 26, 26', 26'', 26''' nur aus einer der beiden Datenverarbeitungsvorrichtungen 30 bzw. 30' gespeist. Mittels der Einrichtung 56 zur Redundanzumschaltung, welche bei der vorliegenden Ausführungsform auf zum Beispiel mechanischer Basis wirkt, kann auf die jeweils passiven Bildschirme 26, 26', 26'', 26''' einschließlich des Druckers 28 umgeschaltet werden.

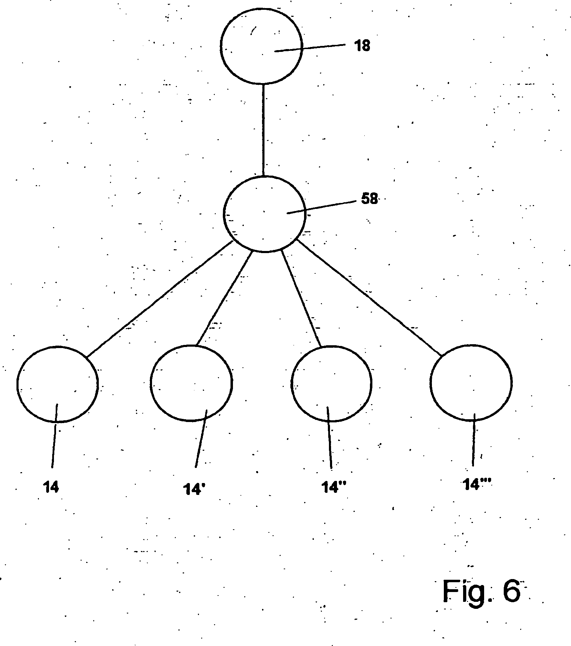

Bei einer Mehrbereichsstruktur, d.h. bei Zusammenschaltung mehrerer Steuerungsvorrichtungen 14, 14', 14'', 14''', ist, wie in den Fig. 2 und 6 schematisch dargestellt ist, zur Vermeidung einer Kollision von Daten und/oder Informationen, die von wenigstens einer weiteren Steuerungsvorrichtung 14, 14', 14'', 14''' stammen und zeitgleich übersandt werden, vorzugsweise eine Ethernet-Schalteinrichtung 58, 58' sternpunktartig zwischengeschaltet. Der Sternpunkt wird jeweils durch die Ethernet-Schalteinrichtung 58, 58' gebildet, die zwischen jeder der Steuerungsvorrichtungen 14, 14', 14'', 14''' einerseits und dem Bedienplatz 18 andererseits in die zwei unabhängigen Kanäle 20, 20' zwischengeordnet ist und somit einen eigenen Port zur Verfügung stellt. Damit werden kollisionsfrei zu betreibende Punkt-zu-Punkt-Verbindungen sichergestellt. Durch den Ausschluss einer .Kollision von Daten und/oder Informationen untereinander lässt sich ein Vollduplex-Betrieb bei der Nutzdatenübertragung erhalten.

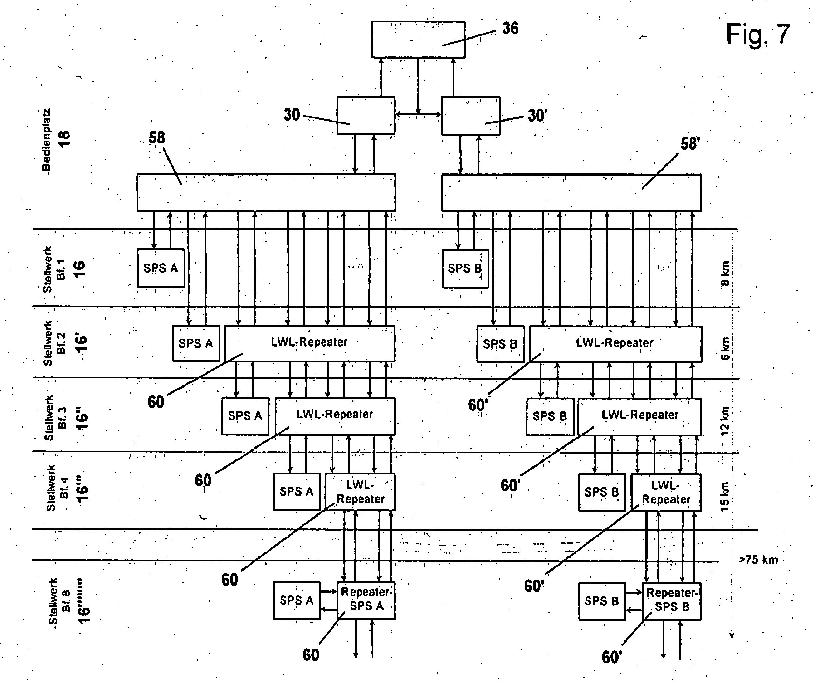

Bei Steuerungsvorrichtungen 14, 14', 14''', 14''', die örtlich von einander weiter, zum Beispiel mehr als 15 km, entfernt sind, ist mindestens eine Wiederholungseinrichtung 60, 60' bzw. ein sogenannter Repeater in den zwei unabhängigen Kanälen 20, 20' zwischerigeschaltet. Derartige Wiederholungseinrichtungen 60, 60' sind etwa in der Fig. 7 gezeigt. Damit können die erfassten Daten und/oder Informationen des Betriebszustandes wiederholt und weitergeleitet werden.

Ist die örtliche Entfernung länger, ist eine zusätzliche Aufarbeitung der Daten und/oder Informationen vorteilhaft, wenn nicht sogar erforderlich. Während eine Wiederholungseinrichtung 60, 60' lediglich eine hardwaremäßige Verstärkung der jeweiligen Signale vornimmt und damit die Dispersionen der Signale verstärkt, erfolgt bei der Aufarbeitung der Signale eine Demodulation mit anschließender Modulation. Sämtliche Unschärfen der verstärkten Signale lassen sich dadurch eliminieren. Eine solche Aufarbeitung der dispersions-lastigen Signale wird mittels einer Aufbereitungseinnchtung eines sicheren Rechners durchgeführt.

Im Einzelnen wird das erfindungsgemäße Verfahren anhand der in den Fig. 1 bis 7 gezeigten Anordnung 10 nach der Erfindung beispielhaft erläutert:

Wie die Fig. 1 und 2 zeigen, werden zunächst Daten und/oder Informationen eines Betriebszustandes des wenigstens einen Verkehrssteuerungssystems 12, 12', 12'', 12''' bzw. der wenigstens einer Steuerungsvorrichtung 14, 14', 14'', 14''' eines elektronischen Stellwerks 16, 16', 16'', 16''' für den spurgebundenen Verkehr durch die Steuerungsvorrichtung 14, 14', 14'', 14''' erfasst.

Sodann werden die erfassten Daten und/oder Informationen des Betriebszustandes von der Steuerungsvorrichtung 14, 14', 14'', 14''' über die zwei unabhängigen Kanäle 20, 20' mittels Lichtwellenleitern, insbesondere Monomode-Glasfasern, gegebenenfalls über die mindestens eine Wiederholungseinrichtung 60, 60' bzw. den mindestens einen sogenannten Repeater und/oder über die mindestens eine Aufarbeitungsvorrichtung, an die zwei miteinander kommunizierenden. Datenverarbeitungsvorrichtungen 30, 30' zeitgleich übersendet. Die Kommunikation zwischen der Steuerungsvorrichtung 14, 14', 14'', 14''' und den zwei Datenverarbeitungsvorrichtungen 30, 30' wird jeweils über ein Ethernet 20, 20' geführt.

Durch die zwei Datenverarbeitüngsvorrichtungen 30, 30' werden die erfassten Daten und/oder Informationen des Betriebszustandes der wenigstens einen Steuerungsvorrichtung 14, 14', 14'', 14''' zu deren Visualisierung auf einem Bildschirm 26, 26', 26'', 26''' oder dergleichen Monitor empfangen und aufbereitet. Dies erfolgt über die Einrichtung 32, 32' zum Empfangen.und Aufbereiten von Daten und/oder Informationen.

Zum Aufbereiten der empfangenen Daten und/oder Informationen des Betriebszustandes der wenigstens einen Steuerungsvorrichtung 14, 14', 14'', 14''' durch die zwei Datenverarbeitungsvorrichtungen 30, 30' wird eine Verifikation einer Sequenznummer der Protokolle der Daten und/oder Informationen vorgenommen. Zu diesem Zweck ist die Einrichtung 32, 32' vorgesehen, die zum Beispiel als Eingangspuffer ausgebildet sein kann. Die Einrichtung 32, 32' bzw. der Eingangspuffer dient unter anderem dazu, die Asynchronität der Daten und/oder Informationen zu glätten, so dass nur übereinstimmende Daten und/oder Informationen des Betriebszustandes bzw. Zustandsdaten in die Prozessdatenbank 48, 48' übernommen werden. Die Daten und/oder Informationen werden dafür in der Einrichtung 32, 32' abgelegt.

Wie der Fig. 3 zu entnehmen ist, wird bei der Verifikation der Sequenznummer der Protokolle der Daten und/oder Informationen durch die Einrichtung 44, 44' in einem ersten Testschritt (A) deren logischer Fortlauf geprüft. Im Anschluss daran wird durch die Einrichtung 46, 46', welch der Einrichtung, 44, 44' 44' nachgeordnet ist, in einem ersten. Testschritt (B) die Sequenznummer zwischen den zwei Datenverarbeitungsvorrichtungen 30, 30' verglichen.

Wird dabei einerseits der logische Fortlauf der Sequenznummer durch die Einrichtung 44, 44' und andererseits die. Übereinstimmung der Sequenznummer zwischen den zwei Datenverarbeitungsvorrichtungen 30, 30' durch die Einrichtung 46, 46' festgestellt, werden die übereinstimmenden Daten und/oder Informationen des Betriebszustandes der wenigstens einen Steuerungsvorrichtung 14, 14', 14'', 14''' mit einem Freivermerk gekennzeichnet und der jeweils benachbarten Datenverarbeitungsvorrichtung 30 bzw. 30' zurückgegeben. Die mit dem Freivermerk gekennzeichneten Daten und/oder Informationen werden anschließend von der Einrichtung 32, 32' bzw. dem Eingangspuffer in die Prozessdatenbank 48, 48' verschoben.

In der Prozessdatenbank 48, 48' sind zugleich Daten und/oder Informationen einer Topologie des Verkehrssteuerungssystems 12, 12', 12'', 12''' oder eines Teiles davon hinterlegt.

Aus den in der Prozessdatenbank 48, 48' abgelegten Daten und/oder Informationen des Betriebszustandes oder wenigstens einen Steuerungsvorrichtung 14, 14', 14'', 14''' und den Daten und/oder Informationen der Topologie des Verkehrssteuerungssystems 12, 12', 12'', 12''' oder eines Teiles davon werden anschließend Bildsignale bzw. ein zu visualisierendes (Melde-) Bild erzeugt und an den Speicher 34, 34', zum Beispiel den Bildspeicher einer Graphikkarte oder auch einen externen Bildspeicher (nicht gezeigt), übergeben. Auf den Speicher 34, 34' wiederum greift die Einrichtung 33, 33' zum Visualisieren bzw. Anzeigen von Daten und/oder Informationen zu, um die Bildsignale bzw. das (Melde-) Bild über die entsprechenden Schnittstellen und Leitungen 35, 35' an den Bildschirm 26, 26', 26'', 26''' zu dessen Anzeige weiterzuleiten.

Parallel dazu wird aus den Daten und/oder Informationen des Betriebszustandes der wenigstens einen Steuerungsvorrichtung 14, 14', 14'', 14''', welche derart aufbereiter wurden und sodann in die Prozessdatenbank 48, 48' gelangt sind, und aus den Daten und/oder Informationen, welche die Topologie des Verkehrssteuerungssystems 12, 12', 12'', 12''' oder eines Teiles davon wiedergeben und in der Prozessdatenbank 48, 48' hinterlegt sind, das jeweilige DVI-Bildsignal durch die zwei Datenverarbeitungsvorrichtungen 30, 30' generiert. Die Generierung der zwei DVI-Bildsignale erfolgt durch die Einrichtung 36, 36', die beispielsweise als DVI-Graphikkarte ausgestaltet ist. Die Einrichtung 36, 36' greift zu diesem Zweck gleichermaßen auf den Speicher 34, 34' zu.

Mit anderen Worten erfolgt das Visualisieren und Anzeigen der Daten und/oder Informationen auf dem Bildschirm 26, 26', 26'', 26''' Online und parallel zum Vergleich der Daten und/oder Informationen auf der Basis der zwei durch die zwei Datenverarbeitungsvorrichtungen 30, 30' bereitgestellten bzw. erzeugten DVI-Bildsignale, zugleich aber getrennt voneinander. Getrennt voneinander soll in diesem Zusammenhang lediglich bedeuten, dass es insoweit durchaus möglich ist, die Daten und/oder Informationen auf dem Bildschirm 26, 26', 26'', 26''' durch Bildsignale nach einem von dem DVI-Standard unterschiedlichen Standard, zum Beispiel nach dem VGA-Standard, anzuzeigen.

Demgegenüber werden die Daten und/oder Informationen des Betriebszustandes der wenigstens einen Steuerungsvorrichtung 14, 14', 14'', 14''' blockiert, sofern durch die Einrichtung 44, 44' festgestellt wurde, dass der logische Fortlauf der Sequenznummer fehlt, und/oder sofern durch die Einrichtung 46, 46' detektiert wurde, dass eine Übereinstimmung der Sequenznummer zwischen den zwei Datenverarbeitungsvorrichtungen 30, 30' nicht vorliegt.

Vor einer solchen Blockierung werden die Daten und/oder Informationen des Betriebszustandes der wenigstens einen Steuerungsvorrichtung 14, 14', 14'', 14''' vorsorglich erneut einer Verifikation unterzogen. Dabei werden die Daten und/oder Informationen, die in der Einrichtung 32, 32' zum Empfangen und Aufbereiten der Daten und/oder Informationen bzw. dem Eingangspuffer verbleiben, mit Zeitstempeln versehen und auf Überalterung überpruft. Nach 500 ms werden die Daten und/oder Informationen des Betriebszustandes wenigstens ein weiteres Mal von der wenigstens einen Steuerungsvorrichtung 14', 14', 14'', 14''' an die zwei Datenverarbeitungsvorrichtungen 30, 30' übersendet.

Für den Fall, dass eine erneute Verifikation zu einem gleichen Ergebnis führt und eine Blockierung der Daten und/oder Informationen des Betriebszustandes der wenigstens einen Steuerungsvorrichtung 14, 14', 14'', 14''' erfolgt, wird die Blockierung zugleich über eine Aktualisierungsmeldeeinrichtung bekanntgemacht. Die Blockierung kann dem Betriebspersonal gegebenenfalls mittels Bildern oder entsprechenden (akustischen und/oder optischen) Warnhinweisen auf einem der weiteren zwei Bildschirme 26', 26'' dargestellt werden.

Die Verifikation der Sequenznummer der Protokolle der Daten und/oder Informationen wird vorzugsweise in festgelegtem Zyklus durchgeführt. Zu diesem Zweck ist eine Überwachungseinrichtung bzw. ein Watchdog vorgesehen. Zum Beispiel kann der Abgleich mit einem Pollingzyklus von 50 ms erfolgen. Die Daten und/oder Informationen des Betriebszustandes werden dann in einem 50 ms-Takt von den zwei Datenverarbeitungsvorrichtungen 30, 30' von der wenigstens einen Steuerungsvorrichtung 14, 14', 14'', 14''' angefordert und an diese übertragen.

Das pixelgenau erzeugte DVI-Bildsignal jeder der zwei Datenverarbeitungsvorrichtungen 30, 30' wird daraufhin über die Leitungen 40, 40' von den zwei Datenverarbeitungsvorrichtungen 30, 30' an die entsprechende Schnittstelle der Bildsignalvergleichsvorrichtung 38 angelegt. Die zwei DVI-Bildsignale werden von der Bildsignalvergleichsvorrichtung 38 wie folgt miteinander verglichen und ausgewertet.

Zum Vergleichen der zwei DVI-Bildsignale durch die Bildsignalvergleichsvorrichtung 38 wird zunächst eine Synchronisierung der zwei Datenverarbeitungsvorrichtungen 30, 30' untereinander durch die Einrichtung 50 der Bildsignalvergleichsvorrichtung 38 vorgenommen. Dabei wird der Takt der Bildschirmwiederholfrequenz vorgegeben und werden die zwei Datenverarbeitungsvorrichtungen 30, 30' zyklisch zur Visualisierung der aktuellen Daten und/oder Informationen aufgefordert. Beides erfolgt durch die Bildsignalvergleichsvorrichtung 38 selbst.

Entsprechend der Fig. 4 wird zum Vergleichen der zwei DVI-Bildsignale des Weiteren eine Synchronisierung der zwei DVI-Bildsignale vorgenommen, die durch die Einrichtung 52 der Bildsignalvergleichsvorrichtung 38 erfolgt. Die zwei DVI-Bildsignale werden dazu in einen Zwischenspeicher, insbesondere einen Ringspeicher, der Bildsignalvergleichsvorrichtung 38 eingelesen.

Durch die Einrichtung 52 werden die zwei DVI-Bildsignale anschließend mit einer Kennzeichnung an einander korrespondierender Stelle innerhalb des jeweiligen DVI-Bildsignales versehen. Jedes. DVI-Bildsignal, das ein Pixel eines Bildes- beschreib, besteht aus 2 Bit Steuercode, 6 Bit Kontrollcode und 24 Bit Farbcode. Zu deren Kennzeichnung werden die zwei DVI-Bildsignale an einander korrespondierender Stelle mit zwei Triggern versehen. Die zwei Trigger werden insbesondere auf die Clock-Signale der beiden Steuercodes der zwei DVI-Bildsignale zur Kennzeichnung des Anfangs oder des Endes eines Bildes gelegt.

Im Anschluß daran werden die zwei DVI-Bildsignale in einer ersten. Richtung, zum Beispiel nach rechts, zu- bzw. gegeneinander verschoben, bis die Kennzeichnung der zwei DVI-Bildsignale an einander korrespondierender Stelle zur Deckung gelangen.

Wird beim Vergleichen bzw. Überprüfen dann eine Übereinstimmung der zwei miteinander verglichenen DVI-Bildsignale festgestellt, wird von der Bildsignalvergleichsvorrichtung 38 ein Impuls oder ein Signal, zum Beispiel zur Freigabe, generiert und an die zwei Datenverarbeitungsvorrichtungen 30, 30' gesendet. Ein solcher Impuls bzw. ein solches Signal stelltmithin quasi eine Bestätigung dar. Die Darstellung der auf dem Bildschirm 26 bereits mittels der Einrichtung 33, 33' angezeigten Daten und/oder Informationen bleibt aufrechterhalten. Damit ist eine weitergehende Bedienung und/oder Steuerung der wenigstens einen Steuerungsvorrichtung 14, 14', 14'', 14''' durch das Betriebspersonal ungehindert möglich.

Bei festgestellter Abweichung zwischen den zwei miteinander verglichenen DVI-Bildsignalen hingegen werden die zwei DVI-Bildsignale in einer zweiten, zu der ersten entgegengesetzten Richtung, zum Beispiel nach links, zu- bzw. gegeneinander verschoben, abermals bis die Kennzeichnung der zwei DVI-Bildsignale an einander korrespondierender Stelle zur Deckung gelangen.

Wird auch dabei eine Abweichung zwischen den zwei miteinander verglichenen DVI-Bildsignalen festgestellt, wird von der Bildsignalvergleichsvorrichtung 38 ein Impuls oder ein Signal zur Sperrung der weitergehenden Bedienung und/oder Steuerung der wenigstens einen Steuerungsvorrichtung gesetzt.

Alternativ dazu ist es gleichermaßen denkbar, dass die Bildsignälvergleichsvorrichtung 38 keinen Impuls oder kein Signal zur Sperrung setzt, sondern lediglich den Impuls oder das Seignal, welcher/welches zur Freigabe und damit Bestätigung der bestehenden Anzeige der Daten und/oder Informationen auf dem Bildschirm 26 gesendet wird, unterdrückt.

Eine solche Sperrung der weitergehenden Bedienung und/oder Steuerung der wenigstens einen Steuerungsvorrichtung 14, 14', 14'', 14''' kann dem Betriebspersonal schließlich über eine Aktualisierungsmeldeeinrichtung bekanntgemacht werden. Die Sperrung kann dem Betriebspersonal beispielsweise anhand von Bildern oder entsprechenden (akustischen und/oder optischen) Warnhinweisen auf einem der weiteren zwei Bildschirme 26', 26'' präsentiert werden.

Die vorliegende Erfindung ist nicht auf die dargestellte Ausführungsform der Anordnung 10 beschränkt. Beispielsweise ist es denkbar, dass der Speicher 34, 34', der bei dem gezeigten Ausführungsbeispiel als Bildspeicher einer Graphikkarte ausgestaltet ist oder auch durch einen externen Speicher oder Bildspeicher (nicht gezeigt) gebildet sein kann, durch: die Prozessdatenbank 48, 48' ersetzt ist. Die Prozessdatenbank 48, 48' würde insoweit die Funktion des Speichers 34, 34' übernehmen, was zugleich zur weiteren Vereinfachung der Bauweise der Anordnung 10 führen würde. Darüber hinaus ist es ohne weiteres möglich, die Einrichtungen 33, 33' in einem beliebigen anderen - sprich analogen oder digitalen - Graphikformat auszubilden. Insoweit ließe sich beispielsweise anstelle der VGA-Graphikkarte, wie bei der in den Fig. 1 bis 3 und 5 beispielhaft, dargestellten Ausführungsform der Anordnung. 10 vorgesehen ist, gleichermaßen eine DVI-Graphikkarte oder auch eine HDTV (High Definition TeleVision)-Graphikkarte verwenden. Vor allem bei Verwendung einer DVI-Gräphikkarte als Einrichtung 33, 33' zum Visualisieren der Daten und/oder Informationen würde die Bauweise der Anordnung 10 insgesamt noch weiter vereinfacht werden. Bei einer solchen konstruktiven Ausgestaltung würde eine gesonderte Einrichtung 36, 36' zum pixelgenauen Erzeugen eines DVI-Bildsignales entfallen können. Deren Funktion jedenfalls würde von der Einrichtung 33, 33' mit übernommen.

## Patentansprüche

1. Verfahren zur sicheren Überwachung und Auswertung von Betriebszuständen wenigstens eines Verkehrssteuerungssystems (12, 12', 12'', 12'''), insbesondere wenigstens einer Steuerungsvorrichtung (14, 14', 14'', 14''') eines elektronischen Stellwerks (16, 16', 16'', 16''') für den spurgebundenen Verkehr, umfassend folgende Schritte:
a) Erfassen von Daten und/oder Informationen eines Betriebszustandes durch die wenigstens eine Steuerungsvorrichtung (14, 14', 14'', 14'''),
b) zeitgleiches Übersenden der erfassten Daten und/oder Informationen des Betriebszustandes von der wenigstens einen Steuerungsvorrichtung (14, 14', 14'', 14''') über zwei unabhängige Kanäle (20, 20') an zwei gesonderte, miteinander kommunizierende Datenverarbeitungsvorrichtungen (30, 30'),
c) Empfangen und Aufbereiten der erfassten Daten und/oder Informationen des Betriebszustandes der wenigstens einen Steuerungsvorrichtung (14, 14', 14'', 14''') durch die zwei Datenverarbeitungsvorrichtungen (30, 30'),
d) Visualisieren der empfangenen und aufbereiteten Daten und/oder Informationen des Betriebszustandes auf einem Bildschirm (26, 26', 26'', 26''', 26'''') oder dergleichen durch wenigstens eine der zwei Datenverarbeitungsvorrichtungen (30, 30'),
e) pixelgenaues Erzeugen eines Bildsignales nach DVI (Digital Visual Interface)-Standard aus den empfangenen und aufbereiteten Daten und/oder Informationen des Betriebszustandes jeweils durch die zwei Datenverarbeitungsvorrichtungen (30, 30') und Übergeben der zwei DVI-Bildsignale von den zwei Datenverarbeitungsvorrichtungen (30, 30') an eine Bildsignalvergleichsvorrichtung (38),
f) Vergleichen und Auswerten der zwei DVI-Bildsignale miteinander durch die Bildsignalvergleichsvorrichtung (38), und
g) Erzeugen oder Unterdrücken eines Impulses oder Signales in Antwort auf die Auswertung des Vergleichs zwischen den zwei DVI-Bildsignalen sowie Weiterleiten dessen von der Bildsignalvergleichsvorrichtung (38) an die zwei Datenverarbeitungsvorrichtungen (30, 30') zur weitergehenden Bedienung und/oder Steuerung der wenigstens einen Steuerungsvorrichtung (14, 14', 14'', 14''') oder zur Sperrung der weitergehenden Bedienung und/oder Steuerung der wenigstens einen Steuerungsvorrichtung (14, 14', 14'', 14''').

2. Verfahren nach Anspruch 1, **dadurch gekennzeichnet, dass** die erfassten Daten und/oder Informationen des Betriebszustandes zeitgleich von der wenigstens einen Steuerungsvorrichtung (14, 14', 14'', 14''') an die zwei Datenverarbeitungsvorrichtungen (30, 30') jeweils über ein Ethernet (20, 20') übersendet werden.

3. Verfahren nach Anspruch 1 oder 2, **dadurch gekennzeichnet, dass** die erfassten Daten und/oder Informationen des Betriebszustandes zeitgleich von der wenigstens einen Steuerungsvorrichtung (14, 14', 14'', 14''') an die zwei Datenverarbeitungsvorrichtungen (30, 30') unter Zwischenschaltung mindestens einer Wiederholungseinrichtung zur Wiedergabe und Weiterleitung der erfassten Daten und/oder Informationen des Betriebszustandes und/oder einer Aufbereitungseinrichtung zur Demodulation mit anschließender Modulation übersendet werden.

4. Verfahren nach einem der Ansprüche 1 bis 3, **dadurch gekennzeichnet, dass** die erfassten Daten und/oder Informationen des Betriebszustandes zeitgleich von der wenigstens einen Steuerungsvorrichtung (14, 14', 14'', 14''') an die zwei Datenverarbeitungsvorrichtungen (30, 30') mittels Lichtwellenleitern übersendet werden.

5. Verfahren nach einem der Ansprüche 1 bis 4, **dadurch gekennzeichnet, dass** zum Aufbereiten der empfangenen Daten und/oder Informationen des Betriebszustandes der wenigstens einen Steuerungsvorrichtung (14, 14', 14'', 14''') durch die zwei Datenverarbeitungsvorrichtungen (30, 30') eine Verifikation einer Sequenznummer der Protokolle der Daten und/öder Informationen vorgenommen wird.

6. Verfahren nach Anspruch 5, **dadurch gekennzeichnet, dass** die Daten und/oder Informationen des Betriebszustandes der wenigstens einen Steuerungsvorrichtung (14, 14', 14'', 14''') zur Verifikation der Sequenznummer der Protokolle der Daten und/oder Informationen in einem Eingangspuffer der jeweiligen Datenverarbeitungsvorrichtung (30, 30') abgelegt werden.

7. Verfahren nach Anspruch 5 oder 6, **dadurch gekennzeichnet, dass** bei der Verifikation der Sequenznummer der Protokolle der Daten und/oder Informationen deren logischer Fortlauf geprüft wird.

8. Verfahren nach einem der Ansprüche 5 bis 7, **dadurch gekennzeichnet dass** bei der Verifikation der Sequenznummer der Protokolle der Daten und/oder Informationen die Sequenznummer zwischen den zwei Datenverarbeitungsvorrichtungen (30, 30') verglichen wird.

9. Verfahren nach einem der Ansprüche 5 bis 8, **dadurch gekennzeichnet, dass** die Daten und/oder Informationen des Betriebszustandes der wenigstens einen Steuerungsvorrichtung (14, 14', 14'', 14''') bei Feststellung des logischen Fortlaufs der Sequenznummer und bei Übereinstimmung der Sequenznummer zwischen den zwei Datenverarbeitungsvorrichtungen (30, 30') in eine Prozessdatenbank (48, 48') oder dergleichen der jeweiligen Datenverarbeitungsvorrichtung (30, 30'), in welcher zugleich Daten und/oder Informationen einer Topologie des Verkehrssteuerungssystems (12, 12', 12'', 12''') oder eines Teiles davon hinterlegt sind, verschoben werden.

10. Verfahren nach einem der Ansprüche 1 bis 9, **dadurch gekennzeichnet, dass** das jeweilige DVI-Bildsignal aus den aufbereiteten, insbesondere in die Prozessdatenbank (48, 48') oder dergleichen verschobenen, Daten und/oder Informationen des Betriebszustandes der wenigstens einen Steuerungsvorrichtung (14, 14', 14'', 14''') und den in der Prozessdatenbank (48, 48') oder dergleichen hinterlegten Daten und/oder Informationen der Topologie des Verkehrssteuerungssystems (12, 12', 12'', 12''') oder eines Teiles davon durch die zwei Datenverarbeitungsvorrichtungen (30, 30'), vorzugsweise durch eine entsprechende DVI-Graphikkarte, generiert wird.

11. Verfahren nach einem der Ansprüche 5 bis 10, **dadurch gekennzeichnet, dass** die Daten und/oder Informationen des Betriebszustandes der wenigstens einen Steuerungsvorrichtung (14, 14', 14'', 14''') bei fehlender Feststellung des logischen Fortlaufs der Sequenznummer und/oder bei fehlender Übereinstimmung der Sequenznummer zwischen den zwei Datenverarbeitungsvorrichtungen (30, 30') blockiert werden.

12. Verfahren nach Anspruch 11, **dadurch gekennzeichnet, dass** die Daten und/oder Informationen des Betriebszustandes der wenigstens einen Steuerungsvorrichtung (14, 14', 14'', 14''') vor einer Blockierung wenigstens ein weiteres Mal von der wenigstens einen Steuerungsvorrichtung (14, 14', 14'', 14''') übersendet und erneut einer Verifikation unterzogen werden.

13. Verfahren nach einem der Ansprüche 5 bis 12, **dadurch gekennzeichnet, dass** die Verifikation der Sequenznummer der Protokolle der Daten und/oder Informationen in festgelegtem und, insbesondere durch eine Überwachungseinrichtung, überwachtem Zyklus durchgeführt wird.

14. Verfahren nach einem der Ansprüche 1 bis 13, **dadurch gekennzeichnet, dass** zum Vergleichen der zwei von den zwei Datenverarbeitungsvorrichtungen (30, 30') übergebenen DVI-Bildsignale durch die Bildsignalvergleichsvorrichtung (36) eine Synchronisierung der zwei Datenverarbeitungsvorrichtungen (30, 30') untereinander vorgenommen wird, wobei durch die Bildsignalvergleichsvorrichtung (38) der Takt der Bildschirmwiederholfrequenz vorgegeben wird und die zwei Datenverarbeitungsvorrichtungen (30, 30') zyklisch zur Visualisierung der aktuellen Daten und/oder Informationen aufgefordert werden.

15. Verfahren nach einem der Ansprüche 1 bis 14, **dadurch gekennzeichnet, dass** zum Vergleichen der zwei von den zwei Datenverarbeitungsvorrichtungen (30, 30') übergebenen DVI-Bildsignale durch die Bildsignalvergleichsvorrichtung (38) eine Synchronisierung der zwei DVI-Bildsignale vorgenommen wird.

16. Verfahren nach Anspruch 15, **dadurch gekennzeichnet, dass** die zwei von den zwei Datenverarbeitungsvorrichtungen (30, 30') übergebenen DVI-Bildsignale zur Synchronisierung in einen Zwischenspeicher, insbesondere einen Ringspeicher, der Bildsignalvergleichsvorrichtung (38) eingelesen und mit einer Kennzeichnung an einander korrespondierender Stelle innerhalb des jeweiligen DVI-Bildsignales versehen werden.

17. Verfahren nach Anspruch 16, **dadurch gekennzeichnet, dass** zur Kennzeichnung der zwei DVI-Bildsignale an einander korrespondierender Stelle zwei Trigger auf die zwei DVI-Bildsignale gelegt werden, wobei insbesondere die zwei Trigger auf die Clock-Signale der beiden Steuercodes der zwei DVI-Bildsignale zur Kennzeichnung des Anfangs oder des Endes eines Bildes gelegt werden.

18. Verfahren nach einem der Ansprüche 15 bis 17, **dadurch gekennzeichnet, dass** die zwei DVI-Bildsignale in einer ersten Richtung zu- bzw. gegeneinander verschoben werden, bis die Kennzeichnung der zwei DVI-Bildsignale an einander korrespondierender Stelle zur Deckung gelangen.

19. Verfahren nach einem der Ansprüche 1 bis 18, **dadurch gekennzeichnet, dass** bei festgestellter Übereinstimmung der zwei miteinander verglichenen DVI-Bildsignale von der Bildsignalvergleichsvorrichtung (38) ein Impuls oder ein Signal generiert und an die zwei Datenverarbeitungsvorrichtungen (30, 30') zur weitergehenden Bedienung und/oder Steuerung der wenigstens einen Steuerungsvorrichtung (14, 14', 14'', 14''') gesendet wird.

20. Verfahren nach einem der Ansprüche 1 bis 18, **dadurch gekennzeichnet, dass** bei festgestellter Abweichung zwischen den zwei miteinander verglichenen DVI-Bildsignalen die zwei DVI-Bildsignale in einer zweiten, zu der ersten entgegengesetzten Richtung zu- bzw. gegeneinander verschoben werden, bis die Kennzeichnung der zwei DVI-Bildsignale an einander korrespondierender Stelle zur Deckung gelangen.

21. Verfahren nach einem der Ansprüche 1 bis 20, **dadurch gekennzeichnet, dass** bei erneut festgestellter Abweichung zwischen den zwei miteinander verglichenen DVI-Bildsignalen von der Bildsignalvergleichsvorrichtung (38) ein Impuls oder ein Signal zur Sperrung der weitergehenden Bedienung und/oder Steuerung der wenigstens einen Steuerungsvorrichtung (14, 14', 14'', 14''') gesetzt wird.

22. Verfahren nach einem der Ansprüche 1 bis 21, **dadurch gekennzeichnet, dass** per Maus (22, 22') und Tastatur (24, 24') getätigte Befehle des Betriebspersonals zur Aufbereitung für das zweikanalige System durch einen Maus-/ Tastatur-Umsetzer (25) rückwirkungsfrei gedoppelt werden.

23. Anordnung zur sicheren Überwachung und Auswertung von Betriebszuständen wenigstens eines Verkehrssteuerungssystems (12, 12', 12'', 12'''), insbesondere wenigstens einer Steuerungsvorrichtung (14, 14', 14'', 14''') eines elektronischen Stellwerks (16, 16', 16'', 16''') für den spurgebundenen Verkehr, insbesondere zur Durchführung des Verfahrens nach einem der vorhergehenden Ansprüche, umfassend zwei gesonderte, miteinander kommunizierende Datenverarbeitungsvorrichtungen (30, 30'), die jeweils eine Einrichtung (32, 32') zum Empfangen und Aufbereiten von erhaltenen Daten und/oder Informationen eines Betriebszustandes der wenigstens einen Steuerungsvorrichtung (14, 14', 14'', 14'''), eine Einrichtung (33, 33') zum Visualisieren der empfangenen und aufbereiteten Daten und/oder Informationen des Betriebszustandes auf einem Bildschirm (26, 26', 26'', 26''', 26'''') oder dergleichen und eine Einrichtung (36, 36') zum pixelgenauen Erzeugen eines Bildsignales nach DVI (Digital Visual Interface)-Standard aus den empfangenen und aufbereiteten Daten und/oder Informationen des Betriebszustandes aufweisen, und eine Bildsignalvergleichsvorrichtung (38) zum Vergleichen und Auswerten der zwei DVI-Bildsignale miteinander sowie zum Erzeugen oder Unterdrücken eines Impulses oder Signales in Antwort auf die Auswertung des Vergleichs zwischen den zwei DVI-Bildsignalen sowie Weiterleiten dessen von der Bildsignalvergleichsvorrichtung (38) an die zwei Datenverarbeitungsvorrichtungen (30, 30') zur weitergehenden Bedienung und/oder Steuerung der wenigstens einen Steuerungsvorrichtung (14, 14', 14'', 14''') oder zur Sperrung der weitergehenden Bedienung und/oder Steuerung der wenigstens einen Steuerungsvorrichtung (14, 14', 14'', 14''').

24. Anordnung nach Anspruch 23, **dadurch gekennzeichnet, dass** die zwei Datenverarbeitungsvorrichtungen (30, 30') zueinander im Wesentlichen identisch, insbesondere identisch, ausgebildet sind.

25. Anordnung nach Anspruch 23 oder 24, **dadurch gekennzeichnet, dass** die zwei Datenverarbeitungsvorrichtungen (30, 30') jeweils wenigstens einen gemeinsamen Bildschirm (26, 26', 26'', 26''', 26'''') aufweisen, der mit einer Einrichtung (56) zur Redundanzumschaltung verbunden ist und über die Einrichtung (33, 33') zum Visualisieren der empfangenen und aufbereiteten Daten und/oder Informationen des Betriebszustandes, insbesondere einen Speicher (34, 34'), vorzugsweise einen Bildspeicher einer Graphikkarte, der zwei Datenverarbeitungsvorrichtungen (30, 30') ansteuerbar ist.

26. Anordnung nach einem der Ansprüche 23 bis 25, **dadurch gekennzeichnet, dass** die zwei Datenverarbeitungsvorrichtungen (30, 30') miteinander und/oder mit der Bildsignalvergleichsvorrichtung (36) über ein Ethernet (42), insbesondere eine Ethernet/LAN (Local Area Network)-Verbindung, kommunizieren.

27. Anordnung nach einem der.Ansprüche 23 bis 26, **dadurch gekennzeichnet, dass** die Einrichtung (32, 32') zum Empfangen und Aufbereiten der erhaltenen Daten und/oder Informationen des Betriebszustandes eine Einrichtung (44, 44') zum Überprüfen des logischen Fortlaufs der Sequenznummer umfasst.

28. Anordnung nach einem der Ansprüche 23 bis 27, **dadurch gekennzeichnet, dass** die Einrichtung (32, 32') zum Empfangen und Aufbereiten der erhaltenen Daten und/oder Informationen des Betriebszustandes eine Einrichtung (46, 46') zum Vergleichen der Sequenznummer zwischen den zwei Datenverarbeitungsvorrichtungen (30, 30') umfasst.

29. Anordnung nach einem der Ansprüche 23 bis 28, **dadurch gekennzeichnet, dass** der Einrichtung (32, 32') zum Empfangen und Aufbereiten der erhaltenen Daten und/oder Informationen des Betriebszustandes eine Einrichtung zu deren Überwachung in festgelegtem Zyklus zugeordnet ist.

30. Anordnung nach einem der Ansprüche 23 bis 29, **dadurch gekennzeichnet, dass** die zwei Datenverarbeitungsvorrichtungen (30, 30') jeweils eine Prozessdatenbank (48, 48') oder dergleichen zur Aufnahme und Speicherung von aufbereiteten Daten und/oder Informationen des Betriebszustandes der wenigstens einen Steuerungsvorrichtung (14, 14', 14'', 14''') und Daten und/oder Informationen einer Topologie des Verkehrssteuerungssystems (12, 12', 12'', 12''') oder eines Teiles davon umfassen.

31. Anordnung nach einem der Ansprüche 23 bis 30, **dadurch gekennzeichnet, dass** die Einrichtung (33, 33') zum Visualisieren der Daten und/oder Informationen als analoge Graphikkarte, insbesondere als VGA (Video Graphics Array)-Graphikkarte, oder als digitale Graphikkarte, insbesondere als DVI-Graphikkarte oder HDTV (High Definition TeleVision)-Graphikkarte, ausgebildet ist.

32. Anordnung nach einem der Ansprüche 23 bis 31, **dadurch gekennzeichnet, dass** die Einrichtung (36, 36') zum pixelgenauen Erzeugen des DVI-Bildsignales als DVI-Graphikkarte ausgebildet ist.

33. Anordnung nach einem der Ansprüche 23 bis 32, **dadurch gekennzeichnet, dass** die zwei Datenverarbeitungsvorrichtungen (30, 30') mit der Bildsignalvergleichsvorrichtung (38) jeweils unmittelbar über die Einrichtung (36, 36') zum pixelgenauen Erzeugen eines DVI-Bildsignales, insbesondere die DVI-Graphikkarte, verbunden sind.

34. Anordnung nach einem der Ansprüche 23 bis 33, **dadurch gekennzeichnet, dass** die Bildsignalvergleichsvorrichtung (38) mit einer Einrichtung (50) zur Synchronisierung der zwei Datenverarbeitungsvorrichtungen (30, 30') untereinander versehen ist, die ein Element zur Vorgabe des Taktes der Bildschirmwiederholfrequenz und ein Element zur zyklischen Aufforderung der zwei Datenverarbeitungsvorrichtungen (30, 30') zur Visualisierung der aktuellen Daten und/oder Informationen umfasst.

35. Anordnung nach einem der Ansprüche 23 bis 34, **dadurch gekennzeichnet, dass** die Bildsignalvergleichsvorrichtung (38) eine Einrichtung (52) zur Synchronisierung der zwei DVI-Bildsignale umfasst.

36. Anordnung nach Anspruch 35, **dadurch gekennzeichnet, dass** die Einrichtung (52) zur Synchronisierung der zwei DVI-Bildsignale einen Zwischenspeicher, insbesondere einen Ringspeicher, und eine Einrichtung zur Kennzeichnung der zwei DVI-Bildsignale an einander korrespondierender Stelle innerhalb des jeweiligen DVI-Bildsignales umfasst.

37. Anordnung nach Anspruch 36, **dadurch gekennzeichnet, dass** der Zwischenspeicher, insbesondere der Ringspeicher, eine Speicherkapazität für wenigstens ein DVI-Bildsignal, insbesondere drei DVI-Bildsignale, aufweist.

38. Anordnung nach Anspruch 36 oder 37, **dadurch gekennzeichnet, dass** die Einrichtung zur Kennzeichnung der zwei DVI-Bildsignale an einander korrespondierender Stelle ein Element zum Generieren von zwei auf die zwei DVI-Bildsignale zu legenden Triggern umfasst.

39. Anordnung nach einem der Ansprüche 35 bis 38, **dadurch gekennzeichnet, dass** die Einrichtung (52) zur Synchronisierung der zwei DVI-Bildsignale ein Element zur Verschiebung der zwei DVI-Bildsignale zu- bzw. gegeneinander und ein Element zur gegenseitigen Indeckungbringung der Kennzeichnung der zwei DVI-Bildsignale an einander korrespondierender Stelle aufweist.

40. Anordnung nach einem der Ansprüche 23 bis 39, **dadurch gekennzeichnet, dass** die Bildsignalvergleichsvorrichtung (38) eine Einrichtung zum Vergleichen und Auswerten der zwei DVI-Bildsignale miteinander umfasst.

41. Anordnung nach einem der Ansprüche 23 bis 40, **dadurch gekennzeichnet, dass** die Bildsignalvergleichsvorrichtung (38) eine Einrichtung (54) zum Erzeugen oder Unterdrücken eines Impulses oder Signales in Antwort auf die Auswertung des Vergleichs zwischen den zwei DVI-Bildsignalen umfasst.

42. Anordnung nach einem der Ansprüche 23 bis 41, **dadurch gekennzeichnet, dass** den Datenverarbeitungsvorrichtungen (30, 30') ein mit den Datenverarbeitungsvorrichtungen (30, 30') kommunizierender Maus-/Tastatur-Umsetzer (25) zur rückwirkungsfreien Dopplung von per Maus (22, 22') und Tastatur (24, 24') getätigten Befehlen des Betriebspersonals zugeordnet ist.

43. Verwendung des Verfahrens und/oder der Anordnung nach einem der vorhergehenden Ansprüche zur Fernbedienung und/oder Fernsteuerung wenigstens eines elektronischen Stellwerks für den spurgebundenen Verkehr, insbesondere für den Schienen- und Bahnverkehr, vorzugsweise für Eisenbahnen, gummibereifte Metrobahnen, Einschienenbahnen oder Hänge-/Schwebebahnen, ganz bevorzugt auf Regionalstrecken, mittels eines sicheren Bedienplatzes an zentraler Stelle.

## Claims

1. Method for the safe monitoring and evaluation of operating states of at least one traffic control system (12, 12', 12'', 12'''), especially of at least one control device (14, 14', 14'', 14''') of an electronic railway control centre (16, 16', 16'', 16''') for rail-borne traffic, comprising the following steps:
a) obtaining data and/or information on an operating state by means of the at least one control device (14, 14', 14'', 14'''),
b) simultaneous transmission of the obtained data and/or information on the operating state of the at least one control device (14, 14', 14'', 14''') via two independent channels (20, 20') to two separate data processing devices (30, 30') communicating with each other,
c) receiving and processing the obtained data and/or information on the operating state of the at least one control device (14, 14', 14'', 14''') by means of the two data processing devices (30, 30'),
d) visualizing the received and processed data and/or information on the operating state on a screen (26, 26', 26'', 26''', 26'''') or similar by at least one of the two data processing devices (30, 30'),
e) pixel-accurate generation of a video signal according to the DVI (Digital Visual Interface) standard from the received and processed data and/or information on the operating state, in each case by means of the two data processing devices (30, 30'), and transmitting the two DVI video signals from the two data processing devices (30, 30') to a video signal comparison device (38),
f) comparing with each other and evaluating the two DVI video signals by means of the video signal comparison device (38), and
g) generating or suppressing a pulse or signal in response to the evaluation of the comparison between the two DVI video signals, as well as forwarding of said pulse or signal from the video signal comparison device (38) to the two data processing devices (30, 30') for further operation and/or control of the at least one control device (14, 14', 14'', 14'''), or for blocking the further operation and/or control of the at least one control device (14, 14', 14'', 14''').

2. Method according to Claim 1, **characterized in that** the obtained data and/or information on the operating state is simultaneously transmitted from the at least one control device (14, 14', 14'', 14''') to the two data processing devices (30, 30') by means of an Ethernet (20, 20') in each case.

3. Method according to Claim 1 or 2, **characterized in that** the obtained data and/or information on the operating state is transmitted simultaneously from the at least one control device (14, 14', 14'', 14''') to the two data processing devices (30, 30') with at least one repeater device for the reproduction and forwarding of the acquired data and/or information on the operating state, and/or a processing device for demodulation followed by modulation.

4. Method according to any of Claims 1 to 3, **characterized in that** the obtained data and/or information on the operating state is simultaneously transmitted from the at least one control device (14, 14', 14'', 14''') to the two data processing devices (30, 30') by means of optical fibre conductors.

5. Method according to any of Claims 1 to 4, **characterized in that** a verification of a sequence number of the protocols of the data and/or information is carried out for the processing of the obtained data and/or information on the operating state of the at least one control device (14, 14', 14'', 14''') by the two data processing devices (30, 30').

6. Method according to Claim 5, **characterized in that** the data and/or information on the operating state of the at least one control device (14, 14', 14'', 14''') is stored in an input buffer of the respective data processing device (30, 30') for verification of the sequence number of the protocols of the data and/or information.

7. Method according to Claim 5 or 6, **characterized in that** during the verification of the sequence number of the protocols of the data and/or information their logical progression is checked.

8. Method according to any of Claims 5 to 7, **characterized in that** during the verification of the sequence number of the protocols of the data and/or information the sequence number of the two data processing devices (30, 30') is compared.

9. Method according to any of Claims 5 to 8, **characterized in that,** during the determination of the logical progression of the sequence number and if the sequence number between the two data processing devices (30, 30') match, the data and/or information on the operating state of the at least one control device (14, 14', 14", 14''') is shifted into a process database (48, 48') or similar of the respective data processing device (30, 30'), in which both data and/or information on a topology of the traffic control system (12, 12', 12'', 12'''), or part thereof, is stored.

10. Method according to any of Claims 1 to 9, **characterized in that** the respective DVI video signal is generated by the two data processing devices (30, 30'), preferably by an appropriate DVI graphics card, from the processed data and/or information on the operating state of the at least one control device (14, 14', 14'', 14'''), especially shifted into the process database (48, 48') or similar, and from the data and/or information on the topology of the traffic control system (12, 12', 12'', 12'''), or part thereof, stored in the process database (48, 48') or similar.

11. Method according to any of Claims 5 to 10, **characterized in that** the data and/or information on the operating state of the at least one control device (14, 14', 14'', 14''') is blocked if a logical progression of the sequence number is not determined and/or the sequence number between the two data processing devices (30, 30') does not match.

12. Method according to Claim 11, **characterized in that** the data and/or information on the operating state of the at least one control device (14, 14', 14'', 14''') is transmitted at least one more time by the at least one control device (14, 14', 14'', 14''') and subject to a further verification before blocking.

13. Method according to any of Claims 5 to 12, **characterized in that** the verification of the sequence number of the protocols of the data and/or information is carried out in a specified and monitored cycle, especially monitored by a watchdog device.

14. Method according to any of Claims 1 to 13, **characterized in that,** for a comparison by the video signal comparison device (38) of the two DVI video signals supplied by the two data processing devices (30, 30'), the two data processing devices (30, 30') are synchronized with each other, with the timing of the screen refresh frequency being predetermined by the video signal comparison device (38) and the two data processing devices (30, 30'} being cyclically requested for visualization of the current data and/or information.

15. Method according to any of Claims 1 to 14, **characterized in that,** for comparison by the video signal comparison device (38) of the two DVI video signals supplied by the two data processing devices (30, 30'), a synchronization of the two DVI video signals is carried out.

16. Method according to Claim 15, **characterized in that** the two DVI video signals supplied by the two data processing devices (30, 30') are read into a buffer, especially a ring buffer, of the video signal comparison device (38) for synchronization and provided with an identifier at a point corresponding to each other within the respective DVI video signal.

17. Method according to Claim 16, **characterized in that** two triggers are applied to the two DVI video signals at a point corresponding to each other for identification of the two DVI video signals, whereby in particular the two triggers are applied to the clock signals of the two control codes of the two DVI video signals for marking the start or the end of an image.

18. Method according to any of Claims 15 to 17, **characterized in that** the two DVI video signals are shifted in a first direction towards or against each other until the identifiers of the two DVI video signals coincide at a point corresponding to each other.

19. Method according to any of Claims 1 to 18, **characterized in that,** if the two DVI video signals compared with each other are found to match, a pulse or a signal is generated by the video signal comparison device (38) and sent to the two data processing devices (30, 30') for further operation and/or control of the at least one control device (14, 14', 14'', 14''').

20. Method according to any of Claims 1 to 18, **characterized in that,** if a deviation is found between the two DVI video signals compared with each other, the two DVI video signals are shifted in a second direction towards or against each other, opposite to the first direction, until the identifiers of the two DVI video signals coincide at a point corresponding to each other.

21. Method according to any of Claims 1 to 20, **characterized in that,** if a deviation is again found between the two DVI video signals compared with each other, a pulse or a signal for blocking the further operation and/or control of the at least one control device (14, 14', 14'', 14''') is set by the video signal comparison device (38).

22. Method according to any of Claims 1 to 21, **characterized in that** instructions of the operating personnel, input by mouse (22, 22') and keyboard (24, 24'), for processing for the two-channel system are doubled, interference-free, by a mouse/keyboard converter (25).

23. Arrangement for the safe monitoring and evaluation of operating states of at least one traffic control system (12, 12', 12'', 12'''), especially of at least one control device (14, 14', 14'', 14''') of an electronic railway control centre (16, 16', 16'', 16''') for rail-borne traffic, especially for the performance of the method in accordance with one of the preceding claims, comprising two separate data processing devices (30, 30') communicating with each other, each of which having a device (32, 32') for receiving and processing obtained data and/or information on an operating state of the at least one control device (14, 14', 14'', 14'''), a device (33, 33') for visualizing the obtained and processed data and/or information on the operating state on a screen (26, 26', 26'', 26''', 26'''') or similar and a device (36, 36') for the pixel-accurate generation of a video signal in accordance with the DVI (Digital Visual Interface) standard from the obtained and processed data and/or information on the operating state, and a video signal comparison device (38) for comparing and evaluating the two DVI video signals with each other as well as for generating or suppressing a pulse or signal in response to the evaluation of the comparison between the two DVI video signals and also forwarding of it from the video signal comparison device (38) to the two data processing devices (30, 30') for further operation and/or control of the at least one control device (14, 14', 14'', 14'''), or for blocking the further operation and/or control of the at least one control device (14, 14', 14'', 14''').

24. Arrangement according to Claim 23, **characterized in that** the two data processing devices (30, 30') are essentially identical to each other, in particular of identical design.

25. Arrangement according to Claim 23 or 24, **characterized in that** the two data processing devices (30, 30') each have at least one common screen (26, 26', 26'', 26''', 26'''') which is connected to a device (56) for redundant switching and can be controlled through the device (33, 33') for visualization of the obtained and processed data and/or information on the operating state, particularly a storage device (34, 34'), preferably an image storage device of a graphics card, of the two data processing devices (30, 30').

26. Arrangement according to any of Claims 23 to 25, **characterized in that** the two data processing devices (30, 30') communicate with each other and/or with the video signal comparison device (36) by means of an Ethernet (42), particularly an Ethernet/LAN (Local Area Network) connection.

27. Arrangement according to any of Claims 23 to 26, **characterized in that** the device (32, 32') for receiving and processing the obtained data and/or information on the operating state comprises a device (44, 44') for checking the logical progression of the sequence number.

28. Arrangement according to any of Claims 23 to 27, **characterized in that** the device (32, 32') for receiving and processing the obtained data and/or information on the operating state comprises a device (46, 46') for comparing the sequence number between the two data processing devices (30, 30').

29. Arrangement according to any of Claims 23 to 28, **characterized in that** a device is assigned to the device (32, 32') for receiving and processing the obtained data and/or information on the operating state, for its monitoring in a specified cycle.

30. Arrangement according to any of Claims 23 to 29, **characterized in that** the two data processing devices (30, 30') each comprise a process database (48, 48') or similar for receiving and saving processed data and/or information on the operating state of the at least one control device (14, 14', 14'', 14''') and data and/or information on a topology of the traffic control system (12, 12', 12'', 12'''), or a part thereof.

31. Arrangement according to any of Claims 23 to 30, **characterized in that** the device (33, 33') for visualizing the data and/or information is designed as an analogue graphics card, especially as a VGA (Video Graphics Array) graphics card, or as a digital graphics card, especially as a DVI graphics card or HDTV (High Definition TeleVision) graphics card.

32. Arrangement according to any of Claims 23 to 31, **characterized in that** the device (36, 36') for the pixel-accurate generation of the DVI video signal is designed as a DVI graphics card.

33. Arrangement according to any of Claims 23 to 32, **characterized in that** the two data processing devices (30, 30') are connected directly to the video signal comparison device (38) in each case via the device (36, 36') for the pixel-accurate generation of a DVI video signal, especially the DVI graphics card.

34. Arrangement according to any of Claims 23 to 33, **characterized in that** the video signal comparison device (38) is provided with a device (50) for synchronizing the two data processing devices (30, 30') with each other, comprising an element for predetermining the timing of the screen refresh frequency and an element for cyclically requesting the two data processing devices (30, 30') for visualization of the current data and/or information.

35. Arrangement according to any of Claims 23 to 34, **characterized in that** the video signal comparison device (38) comprises a device (52) for synchronizing the two DVI video signals.

36. Arrangement according to Claim 35, **characterized in that** the device (52) for synchronizing the two DVI video signals comprises a buffer, especially a ring buffer, and a device for marking the two DVI video signals at a point corresponding to each other within the respective DVI video signal.

37. Arrangement according to Claim 36, **characterized in that** the buffer, especially the ring buffer, has a storage capacity for at least one DVI video signal, especially three DVI video signals.

38. Arrangement according to Claim 36 or 37, **characterized in that** the device for marking the two DVI video signals at a point corresponding to each other comprises an element for generating two triggers to be applied to the two DVI video signals.

39. Arrangement according to any of Claims 35 to 38, **characterized in that** the device (52) for synchronizing the two DVI video signals has an element for shifting the two DVI video signals towards or against each other and an element bringing the identifiers of the two DVI video signals mutually into coincidence at a point corresponding to each other.

40. Arrangement according to any of Claims 23 to 39, **characterized in that** the video signal comparison device (38) comprises a device for comparing and evaluating the two DVI video signals.

41. Arrangement according to any of Claims 23 to 40, **characterized in that** the video signal comparison device (38) comprises a device (54) for generating or suppressing an impulse or signal in response to the evaluation of the comparison between the two DVI video signals.

42. Arrangement according to any of Claims 23 to 41, **characterized in that** a mouse/keyboard converter (25) communicating with the data processing devices (30, 30') for the interference-free doubling of instructions of the operating personnel input by means of the mouse (22, 22') and keyboard (24, 24') is assigned to the data processing devices (30, 30').

43. Use of the method and/or arrangement according to any of the preceding claims for the remote operation and/or remote control of at least one electronic railway control centre for rail-borne traffic, especially for rail and railway traffic, preferably for railways, rubber-tired metro systems, monorail systems or overhead systems, particularly preferred on regional lines, by means of a safe operator station at a central location.

## Revendications

1. Procédé de surveillance sûre et d'évaluation d'états de fonctionnement d'au moins un système de contrôle de trafic (12, 12', 12'', 12'''), en particulier d'au moins un dispositif de commande (14, 14', 14'', 14''') d'un poste d'aiguillage (16, 16', 16'', 16''') électronique pour le trafic liée à une voie, comprenant les étapes suivantes :
a) détection de données et/ou d'informations d'un état de fonctionnement par le dispositif de commande (14, 14', 14'', 14'''),
b) envoi simultané des données et/ou informations acquises de l'état de fonctionnement, du au moins un dispositif de commande (14, 14', 14'', 14'''), par l'intermédiaire de deux canaux 20, 20') indépendants, à deux dispositifs de traitement de données (30, 30') séparés, communiquant entre eux,
c) réception et préparation des données et/ou informations acquises de l'état de fonctionnement, du au moins un dispositif de commande (14, 14', 14'', 14'''), au moyen des deux dispositifs de traitement de données (30, 30'),
d) visualisation des données et/ou informations, reçues et préparées, de l'état de fonctionnement, sur un écran (26, 26', 26'', 26''', 26'''') ou analogue, par au moins l'un des deux dispositifs de traitement de donnés (30, 30'),
e) génération, précise au pixel près, d'un signal d'image selon le standard VDI (Digital Visual Interface), à partir des données et/ou informations, reçues et préparées, de l'état de fonctionnement, chaque fois par les deux dispositifs de traitement de données (30, 30'), et transfert des deux signaux d'image VDI, par les deux dispositifs de traitement de données (30, 30'), à un dispositif de comparaison de signal d'image (38),
f) comparaison et évaluation mutuelle des deux signaux d'image VDI, par le dispositif de comparaison de signal d'image (38), et
g) génération ou suppression d'une impulsion ou d'un signal, en réponse à l'évaluation de la comparaison entre les deux signaux d'image VDI, ainsi que retransmission de celle-ci ou de celui-ci, par le dispositif de comparaison de signal d'image (38), aux deux dispositifs de traitement de données (30, 30'), de manière à continuer le réglage ou la commande du au moins un dispositif de commande (14, 14', 14'', 14''') ou à bloquer le réglage ou la commande continué(e) du au moins un dispositif de commande (14, 14', 14'', 14''').

2. Procédé selon la revendication 1, **caractérisé en ce que** les données et/ou informations acquises de l'état de fonctionnement sont simultanément envoyées, du au moins un dispositif de commande (14, 14', 14'', 14''') aux deux dispositifs.de traitement de données (30, 30'), chaque fois par l'intermédiaire d'un Ethernet (20, 20').

3. Procédé selon la revendication 1 ou 2, **caractérisé en ce que** les données et/ou informations acquises de l'état de fonctionnement sont simultanément envoyées, du au moins un dispositif de commande (14, 14', 14'', 14''') aux deux dispositifs de traitement de données (30, 30'), avec interposition d'au moins un dispositif de répétition, pour reproduction et retransmission des données et/ou informations acquises de l'état de fonctionnement et/ou d'un dispositif de préparation, pour démodulation avec modulation subséquente.

4. Procédé selon l'une des revendications 1 à 3, **caractérisé en ce que** les données et/ou informations acquises de l'état de fonctionnement sont simultanément envoyées, du au moins un dispositif de commande (14, 14', 14'', 14''') aux deux dispositifs de traitement de données (30, 30'), au moyen de guides d'onde optique.

5. Procédé selon l'une des revendications 1 à 4, **caractérisé en ce qu'**une vérification d'un numéro de séquence des protocoles des données et/ou informations est effectuée, pour préparation des données et/ou informations reçues de l'état de fonctionnement du au moins un dispositif de commande (14, 14', 14'', 14'''), par les deux dispositifs de traitement de données (30, 30').

6. Procédé selon la revendication 5, **caractérisé en ce que** les données et/ou informations acquises de l'état de fonctionnement du au moins un dispositif de commande (14, 14', 14'', 14''') sont déposées dans un tampon d'entrée du dispositif de traitement de données (30, 30') respectif, pour vérification du numéro de séquence des protocoles des données et/ou informations.

7. Procédé selon la revendication 5 ou 6, **caractérisé en ce que,** lors de la vérification des numéros de séquence des protocoles des données et/ou informations, une vérification de leur continuité logique est effectuée.

8. Procédé selon l'une des revendications 5 à 7, **caractérisé en ce que,** lors de la vérification des numéros de séquence des protocoles des données et/ou informations, une comparaison du numéro de séquence entre les deux dispositifs de traitement de données (30, 30') est effectuée

9. Procédé selon l'une des revendications 5 à 8, **caractérisé en ce que** les données et/ou informations de l'état de fonctionnement du au moins un dispositif de commande (14, 14', 14'', 14'''), en cas de continuité logique des numéros de séquence et en cas de coïncidence des numéros de séquence entre les deux dispositifs de traitement de données (30, 30'), sont déplacées dans une banque de données de processus (48, 48'), ou analogue, du dispositif de traitement de données (30, 30') respectif, dans laquelle, en même temps, des données et/ou des informations d'une topologie du système de contrôle de trafic (12, 12', 12'', 12'''), ou d'une partie de celui-ci, sont mémorisées.

10. Procédé selon l'une des revendications 1 à 9, **caractérisé en ce que** le signal d'image VDI respectif est généré à partir des données et/ou informations traitées, en particulier placées dans la banque de données de processus (48, 48') ou analogue, de l'état de fonctionnement du au moins un dispositif de commande (14, 14', 14'', 14'''), et des données et/ou informations, mémorisées dans la banque de données de processus (48, 48') ou analogue, de la topologie du système de contrôle de trafic (12, 12', 12'', 12''') ou d'une partie de celui-ci, par les deux dispositifs de traitement de données (30, 30'), de préférence par une carte graphique DVI correspondante.

11. Procédé selon l'une des revendications 5 à 10, **caractérisé en ce que** les données et/ou informations de l'état de fonctionnement du au moins un dispositif de commande (14, 14', 14'', 14''') sont bloquées en cas de non continuité logique des numéros de séquence et/ou en cas de non coïncidence des numéros de séquence entre les deux dispositifs de traitement de données (30, 30').

12. Procédé selon la revendication 11, **caractérisé en ce que** les données et/ou informations de l'état de fonctionnement du au moins un dispositif de commande (14, 14', 14'', 14''') sont envoyées, avant un blocage, au moins une nouvelle fois par ledit dispositif de commande (14, 14', 14'', 14''') et de nouveau soumises à une vérification.

13. Procédé selon l'une des revendications 5 à 12, **caractérisé en ce que** la vérification des numéros de séquence des protocoles des données et/ou informations est effectuée dans un cycle fixé et, en particulier, surveillé au moyen d'un dispositif de surveillance.

14. Procédé selon l'une des revendications 1 à 13, **caractérisé en ce qu'**une synchronisation des deux dispositifs de traitement de données (30, 30') entre eux est effectuée, pour la comparaison, par le dispositif de comparaison de signal d'image (38), des deux signaux d'image VDI retransmis par les deux dispositifs de traitement de données (30, 30'), la cadence de la fréquence de répétition d'écran étant prédéterminée par le dispositif de comparaison de signal d'image (38), et les deux dispositifs de traitement de données (30, 30') étant sollicités cycliquement pour la visualisation des données et/ou informations actuelles.

15. Procédé selon l'une des revendications 1 à 14, **caractérisé en ce qu'**une synchronisation des deux signaux d'image DVI est effectuée pour la comparaison, par le dispositif de comparaison de signal d'image (38), des deux signaux d'image VDI transmis par les deux dispositifs de traitement de données (30, 30').

16. Procédé selon la revendication 15, **caractérisé en ce que** les deux signaux d'image VDI transmis par les deux dispositifs de traitement de données (30, 30'), sont introduits pour synchronisation dans une mémoire intermédiaire, en particulier un tampon circulaire, du dispositif de comparaison de signal d'image (38), et munis d'un marquage, en des emplacements se correspondant mutuellement, à l'intérieur des signaux d'image VDI respectifs.

17. Procédé selon la revendication 16, **caractérisé en ce que** deux impulsions de déclenchement sont placées, en des emplacements se correspondant mutuellement, sur les deux signaux d'image VDI, afin de marquer les deux signaux d'image VDI, les deux impulsions de déclenchement étant en particulier placées sur les signaux d'horloge des deux codes de commande des deux signaux d'image VDI, de manière à marquer le début ou la fin d'une image.

18. Procédé selon l'une des revendications 15 à 17, **caractérisé en ce que** les deux signaux d'image VDI sont mutuellement décalés dans une première direction, jusqu'à ce que le marquage des deux signaux d'image VDI arrive en coïncidence en des emplacements se correspondant mutuellement.

19. Procédé selon l'une des revendications 1 à 18, **caractérisé en ce que,** dans le cas de coïncidence constatée, par le dispositif de comparaison de signal d'image (38), des deux signaux d'image VDI comparés l'un à l'autre, une impulsion ou un signal est généré et envoyé aux deux dispositifs de traitement de données (30, 30'), de manière à continuer le réglage et/ou la commande du au moins un dispositif de commande (14, 14', 14'', 14''').

20. Procédé selon l'une des revendications 1 à 18, **caractérisé en ce que,** dans le cas d'écart constaté entre les deux signaux d'image VDI comparés l'un à l'autre, les deux signaux d'image VDI sont décalés dans une deuxième direction, opposée à la première, jusqu'à ce que le marquage des deux signaux d'image VDI arrive en coïncidence en des emplacements se correspondant mutuellement.

21. Procédé selon l'une des revendications 1 à 20, **caractérisé en ce que,** dans le cas d'écart constaté de nouveau, entre les deux signaux d'image VDI comparés l'un à l'autre, une impulsion ou un signal est produit, de manière à bloquer la continuation du réglage et/ou de la commande du au moins un dispositif de commande (14, 14', 14'', 14''').

22. Procédé selon l'une des revendications 1 à 21, **caractérisé en ce que** des ordres, produits par souris (22, 22') et clavier (24, 24'), par le personnel d'exploitation, sont doublés de façon non-réactive, par un convertisseur souris/clavier (25), pour préparation pour le système à deux canaux.

23. Dispositif de surveillance sûre et d'évaluation d'états de fonctionnement d'au moins un système de contrôle de trafic (12, 12', 12'', 12'''), en particulier d'au moins un dispositif de commande (14, 14', 14'', 14''') d'un poste d'aiguillage (16, 16', 16'', 16''') électronique pour le trafic liée à une voie, en particulier pour la mise en oeuvre du procédé selon l'une des revendications précédentes, comprenant deux dispositifs de traitement de données (30, 30') séparés, communiquant entre eux, présentant chacun un dispositif (32, 32') pour la réception et la préparation des données et/ou informations obtenues, d'un état de fonctionnement du au moins un dispositif de commande (14, 14', 14'', 14'''), un dispositif (33, 33') pour la visualisation des données et/ou informations, reçues et préparées, de l'état de fonctionnement, sur un écran (26, 26', 26'', 26''', 26'''') ou analogue, et un dispositif (36, 36'), pour la génération, précise au pixel près, d'un signal d'image selon le standard VDI (Digital Visual Interface), à partir des données et/ou informations, reçues et préparées, de l'état de fonctionnement, et un dispositif de comparaison de signal d'image (38), pour comparaison et évaluation mutuelle des deux signaux d'image VDI, ainsi que pour la génération ou suppression d'une impulsion ou d'un signal, en réponse à l'évaluation de la comparaison entre les deux signaux d'image VDI, ainsi que retransmission de celle-ci ou de celui-ci, par le dispositif de comparaison de signal d'image (38), aux deux dispositifs de traitement de données (30, 30'), de manière à continuer le réglage ou la commande du au moins un dispositif de commande (14, 14', 14'', 14''') ou à bloquer le réglage ou la commande continué(e) du au moins un dispositif de commande (14, 14', 14", 14''').

24. Dispositif selon la revendication 23, **caractérisé en ce que** les deux dispositifs de traitement de données (30, 30') sont réalisés de manière sensiblement identique, en particulier de manière identique.

25. Dispositif selon la revendication 23 ou 24, **caractérisé en ce que** les deux dispositifs de traitement de données (30, 30') présentent chacun au moins un écran (26, 26', 26'', 26''', 26'''') commun, relié à un dispositif (56) pour la commutation en redondance, et pouvant être commandé, par l'intermédiaire du dispositif .(33, 33') pour la visualisation des données et/ou informations, reçues et préparées, de l'état de fonctionnement, en particulier une mémoire (34, 34'), de préférence une mémoire d'image d'une carte graphique, des deux dispositifs de traitement de données (30, 30').

26. Dispositif selon l'une des revendications 23 à 25, **caractérisé en ce que** les deux dispositifs de traitement de données (30, 30') communiquent entre eux et/ou avec le dispositif de comparaison de signaux d'image (36) par l'intermédiaire d'un Ethernet (42), en particulier d'une liaison Ethernet/LAN (Local Area Network).

27. Dispositif selon l'une des revendications 23 à 26, **caractérisé en ce que** le dispositif (32, 32') pour la réception et la préparation des données et/ou informations obtenues, de l'état de fonctionnement, comprend un dispositif (44, 44') pour vérifier la continuité logique des numéros de séquence.

28. Dispositif selon l'une des revendications 23 à 27, **caractérisé en ce que** le dispositif (32, 32') pour la réception et la préparation des données et/ou informations obtenues de l'état de fonctionnement comprend un dispositif (46, 46') pour la comparaison des numéros de séquence entre les deux dispositifs de traitement de données (30, 30').

29. Dispositif selon l'une des revendications 23 à 28, **caractérisé en ce qu'**au dispositif (32, 32') pour la réception et la préparation des données et/ou informations obtenues de l'état de fonctionnement est associé un dispositif pour sa surveillance, dans un cycle fixé.

30. Dispositif selon l'une des revendications 23 à 29, **caractérisé en ce que** les deux dispositifs de traitement de données (30, 30') comprennent chacun une banque de données de processus (48, 48') ou analogue, pour recevoir et mémoriser des données et/ou informations traitées de l'état de fonctionnement du au moins un dispositif de commande (14, 14', 14'', 14'''), et des données et/ou informations d'une topologie du système de contrôle de trafic (12, 12', 12'', 12''') ou d'une partie de celui-ci.

31. Dispositif selon l'une des revendications 23 à 30, **caractérisé en ce que** le dispositif (33, 33'), pour la visualisation des données et/ou informations, est réalisé sous forme de carte graphique analogique, en particulier de carte graphique VGA (Video Graphics Array), ou sous forme de carte graphique numérique, en particulier de carte graphique DVI, ou de carte graphique HDTV (High Definition Television).

32. Dispositif selon l'une des revendications 23 à 31, **caractérisé en ce que** le dispositif (36, 36'), pour la génération, précise au pixel près, du signal d'image VDI est réalisé sous forme de carte graphique DVI.

33. Dispositif selon l'une des revendications 23 à 32, **caractérisé en ce que** les deux dispositifs de traitement de données (30, 30') sont reliés au dispositif de comparaison de signal d'image (38), chaque fois directement par l'intermédiaire du dispositif (36, 36') pour la génération, précise au pixel près, d'un signal d'image VDI, en particulier la carte graphique DVI.

34. Dispositif selon l'une des revendications 23 à 33, **caractérisé en ce que** le dispositif de comparaison de signal d'image (38) est muni d'un dispositif (50), pour la synchronisation entre eux des deux dispositifs de traitement de données (30, 30'), comprenant un élément pour attribution de la cadence de la fréquence de répétition d'écran et un élément pour la sollicitation cyclique des deux dispositifs de traitement de données (30, 30'), pour la visualisation des données et/ou informations actuelles.

35. Dispositif selon l'une des revendications 23 à 34, **caractérisé en ce que** le dispositif de comparaison de signal d'image (38) comprend un dispositif (52) pour la synchronisation des deux signaux d'image DVI.

36. Dispositif selon la revendication 35, **caractérisé en ce que** le dispositif (52) pour la synchronisation des deux signaux d'image DVI comprend une mémoire intermédiaire, en particulier un tampon circulaire, et un dispositif d'identification des deux signaux d'image DVI, en des emplacements, se correspondant entre eux, à l'intérieur des signaux d'image DVI respectifs.

37. Dispositif selon la revendication 36, **caractérisé en ce que** la mémoire intermédiaire, en particulier le tampon circulaire, présente une capacité mémoire pour au moins un signal d'image DVI, en particulier trois signaux d'image DVI.

38. Dispositif selon la revendication 36 ou 37, **caractérisé en ce que** le dispositif d'identification des deux signaux d'image DVI en des emplacements correspondant entre eux comprend un élément pour générer deux impulsions de déclenchement, placées sur les deux signaux d'image DVI.

39. Dispositif selon l'une des revendications 35 à 38, **caractérisé en ce que** le dispositif (52) pour la synchronisation des deux signaux d'image DVI présente un élément pour décaler les deux signaux d'image DVI, en rapprochement ou en éloignement, et un élément pour le placement en coïncidence mutuelle de l'identification des deux signaux d'image DVI en des emplacements correspondant entre eux.

40. Dispositif selon l'une des revendications 23 à 39, **caractérisé en ce que** le dispositif de comparaison de signal d'image (38) comprend un dispositif de comparaison et d'évaluation mutuelle des deux signaux d'image DVI.

41. Dispositif selon l'une des revendications 23 à 40, **caractérisé en ce que** le dispositif de comparaison de signal d'image (38) comprend un dispositif (54), pour produire ou supprimer une impulsion ou un signal, en réponse à l'évaluation de la comparaison entre les deux signaux d'image VDI.

42. Dispositif selon l'une des revendications 23 à 41, **caractérisé en ce qu'**un convertisseur souris/clavier (25), communiquant avec les dispositifs de traitement de données (30, 30'), pour doublage, de façon non-réactive, des ordres, produits par souris (22, 22') et clavier (24, 24'), par le personnel d'exploitation, est associé aux dispositifs de traitement de données (30, 30').

43. Utilisation du procédé et/ou du dispositif selon l'une des revendications précédentes, pour le téléréglage et/ou la télécommande d'au moins un poste d'aiguillage électronique pour le trafic liée à une voie, en particulier pour le trafic sur rails et sur piste, de préférence pour des voies de chemin de fer, des voies de métro à bandages en caoutchouc, des vois monorail, ou des voies suspendues/flottantes, de façon tout à fait préférée sur des lignes régionales, au moyen d'un poste de manoeuvre sûr, en un emplacement central.
